# EUROPEAN PATENT APPLICATION

(11) **EP 4 818 591 A1**
(43) Date of publication of application: **07.10.2026**
(21) Application number: 25168661.4
(22) Date of filing: 04.04.2025
(51) Int. Cl.: F24F 11/00, F24F 11/88, F24F 11/89, G05B 19/042

(54) **UNIVERSAL ANALOG CIRCUIT FOR HEATING, VENTILATION, AND AIR CONDITIONING (HVAC) FIELD DEVICES**

(71) Applicant: Belimo Holding SA, 8340 Hinwil (CH)
(72) Inventor: Krebelder, Udo, 8641 St. Marein im Mürztal (AT); Böhle, Peter, 8634 Hombrechtikon (CH)
(74) Representative: Langenstein, Peter

(57) **Abstract**

A heating, ventilation, and air conditioning (HVAC) field device (102) and a method for generating analog output signal are provided. The HVAC field device includes a controller (104) configured to generate an input voltage signal (202), a mode selector (108) for selecting a first mode or a second mode, a terminal (110), and an analog circuit (106) including a first stage (112), a second stage (114) and resistors (116). The first stage generates an intermediate current (204) based on the input voltage signal (202) and a selection of the first mode or the second mode, and the second stage generates an analog output signal (206) based on the intermediate current. The intermediate current is multiplied by a predefined ratio to define the analog output signal. The predefined ratio is associated with one or more resistors of the plurality of resistors. The analog output signal is provided at the terminal (110).

## Description

### FIELD OF THE INVENTION

The present invention relates to a method and a device for controlling an operation of a Heating, Ventilation, and Air Conditioning (HVAC) system. Specifically, the present invention relates to a universal analog circuit for an HVAC field device for configuring an Input/Output (I/O) terminal of the HVAC field device to provide current or voltage output.

### BACKGROUND OF THE INVENTION

The field of industrial automation and building system, including heating and ventilation, and air conditioning (HVAC), has seen substantial advancements in recent years. It may be noted that important components of the HVAC systems are field devices including sensors and actuators. Traditionally, the field devices are designed with fixed configurations, supporting specific functionalities like analog current outputs, analog voltage outputs, or digital signals. This fixed approach presents significant challenges. Limited flexibility in configuration often forces users to select and install devices tailored to specific requirements, making system upgrades or adjustments cumbersome. Furthermore, the production of multiple device variants to support different functionalities leads to increased costs and installation complexity. Compatibility issues also arise as traditional analog devices struggle to integrate seamlessly with modern digital communication protocols. Therefore, there is a need to improve conventional circuit designs to ensure compatibility with various components of HVAC field devices.

### SUMMARY OF THE INVENTION

The following summary is provided to facilitate an understanding of some of the innovative features unique to the present disclosure and is not intended to be a full description. A full appreciation of the present disclosure may be gained by taking the entire specification, claims, drawings, and abstract as a whole.

The present invention relates to a universal I/O circuit for HVAC field devices. The universal I/O circuit allows for software-configurable analog outputs, enabling the selection of current output or voltage output in the HVAC field device. The present disclosure offers high-precision output signals while maintaining cost-effectiveness through a low-complexity design of the universal I/O circuit.

In one aspect, an HVAC field device is described. The HVAC field device includes a controller configured to generate an input voltage signal. The HVAC field device further includes an analog circuit coupled to the controller. The controller is configured to provide the input voltage signal to the analog circuit. The analog circuit includes a first stage, and a second stage coupled to the first stage. The analog circuit further includes a plurality of resistors. Each of the plurality of resistors is coupled to at least one of: the first stage, or the second stage. Further, the HVAC field device includes a mode selector coupled to the analog circuit for selecting one of: a first mode, or a second mode. Further, the HVAC field device includes a terminal coupled to the analog circuit. The analog circuit is configurable to provide an analog output signal at the terminal. The first stage is configured to generate an intermediate current based on the input voltage signal and a selection of one of the first mode, or the second mode. The second stage is configured to generate the analog output signal based on the intermediate current, such that the intermediate current is multiplied by a predefined ratio to define the analog output signal. The predefined ratio is associated with one or more resistors of the plurality of resistors.

In an embodiment, the first mode is a current mode, and the second mode is a voltage mode.

In an embodiment, the second stage is configured to implement a current multiplier configuration. The second stage includes a first amplifier circuit having a first positive terminal, a first negative terminal, and a first output terminal. The second stage further includes a first transistor circuit having a first control terminal, a first terminal, and a second terminal. The first control terminal is coupled to the first output terminal. The second stage further includes a first pair of resistors from the plurality of resistors including a first resistor coupled to the first positive terminal and a second resistor coupled to the first terminal. The first resistor forms a first path for a flow of the intermediate current towards the first positive terminal. The second resistor forms a second path parallel to the first path for a flow of the analog output signal towards the first terminal. Further, the second stage includes a feedback path between the first negative terminal and the first terminal. The feedback path is configurable to adjust a second voltage across the second path substantially equal to a first voltage across the first path.

In an embodiment, a gain factor of the analog circuit corresponds to a ratio of a value of the analog output signal to a value of the input voltage signal. The gain factor is associated with a first set of resistors of the plurality of resistors in the first mode. The gain factor is associated with a second set of resistors of the plurality of resistors in the second mode, and the first set of resistors is exclusive of the second set of resistors. The value, for example an amplitude or a voltage level, of the input voltage signal, which can be a Pulse Width Modulation (PWM) signal, may be considered as an averaged voltage level of the input voltage signal after low-pass filtering to smooth the signal, if the input voltage signal is filtered. The gain factor may also include values that are equal to or less than one.

In an embodiment, the controller is coupled to the mode selector. The controller is configured to generate a mode selection signal for providing the mode selection signal to the mode selector. The mode selection signal is associated with one of the first mode or the second mode.

In an embodiment, the analog circuit further includes a feedback circuit coupled to the mode selector, the feedback circuit including a first feedback path associated with the first mode, and a second feedback path associated with the second mode. The first feedback path is coupled to a current feedback resistor of the plurality of resistors, such that a first voltage difference across the current feedback resistor is substantially equal to the value of the input voltage signal. The second feedback path is coupled to a first junction between a second pair of resistors of the plurality of resistors, such that a third voltage at the first junction is substantially equal to the value of the input voltage signal. The mode selector is configurable to select one of: the first feedback path, or a second feedback path, based on the mode selection signal.

In an embodiment, the analog circuit is further configured to supply a first voltage output signal at the first junction to the controller as an output voltage.

In an embodiment, the plurality of resistors includes a third pair of resistors connected in series, such that the third pair of resistors defines a second junction therebetween. The analog circuit is further configured to generate, using the third pair of resistors, a second voltage output signal at the second junction based on the analog output signal. The analog circuit is further configured to supply the second voltage output signal to the controller as an output voltage.

In an embodiment, the controller further includes an analog-to-digital converter (ADC). The terminal is configured to be coupled to an external component. The controller is further configured to generate, using the ADC, a digital signal based on the output voltage. The controller is further configured to determine status data associated with the external component based on the digital signal. The status data corresponds to at least one of: fault data, connection data, or resistance data.

In an embodiment, the analog circuit is dynamically configurable to operate in one of: an input mode to receive an input signal from an external source at the terminal, or an output mode to supply the analog output signal to the external component via the terminal.

In an embodiment, the analog circuit is configurable to be coupled to a sensor to supply a predefined current via the terminal. The controller is further configured to generate, using the ADC, a sensor signal based on the output voltage. The controller is further configured to determine sensor status data associated with the sensor based on the sensor signal. The sensor status data indicates sensor resistance data. The controller is preferably configured to determine temperature data associated with the sensor based on the sensor status data.

In an embodiment, the first stage is configured as a current sink. The first stage includes a second amplifier circuit having a second positive terminal coupled to the controller to receive the input voltage signal, a second negative terminal coupled to the mode selector, and a second output terminal. The first stage includes a second transistor circuit having a second control terminal, a third terminal, and a fourth terminal. The second control terminal is coupled to the second output terminal, the fourth terminal is coupled to the current feedback resistor, and the third terminal is coupled to the second stage.

In an embodiment, the controller is further configured to generate the mode selection signal based on one of: the status data, the sensor status data, or a user input.

In an embodiment, the analog circuit further includes a switchable pull-down load coupled to the terminal. The switchable pull-down load is configurable to apply a pull-down bias based on the selection of the second mode by the mode selector, such that the pull-down bias is applied to achieve a defined voltage at the terminal in the second mode. The switchable pull-down load is preferably implemented based on a current mirror configuration. The analog circuit further includes a switching circuit including a plurality of input nodes, an output node connected to the analog circuit, and a control input node coupled to the controller to receive a control signal. A first input node of the plurality of input nodes is connected to a first reference voltage and a second input node of the plurality of input nodes is connected to a second reference voltage. The switching circuit is configured to switch between the first reference voltage and the second reference voltage based on the control signal. The analog circuit further includes a voltage buffer positioned between the terminal and one of: the second pair of resistors, or the third pair of resistors.

In an embodiment, the HVAC field device comprises an actuator and/or a sensor. The actuator may include an electric motor for adjusting the position of an actuated part, such as a valve or a damper. The sensor may include a pipe sensor, a duct sensor, or a wall-mounted room sensor. In an embodiment, the HVAC field device is hydraulically and/or mechanically connectable to at least part of fluid transportation circuit(s) of an HVAC system with fluid supply/return lines, such as pipes, ducts, or ports of valves and/or dampers, to regulate and/or measure parameters of fluid(s) flowing therethrough.

The HVAC field device may include an HVAC base block comprising the actuator and/or the sensor and an HVAC add-on block, including the analog circuit to extend the functionality of the HVAC base block.

In an embodiment, the HVAC field device includes a digital communication interface allowing the configuration of the analog circuit and/or the controller via a computing device, particularly a mobile computing device. The communication interface may include a communication circuit, in particular a Near Field Communication (NFC) circuit. The HVAC field device is preferably configured to use power generated from the NFC signal to transmit configuration parameters for the configuration of the analog circuit and/or the controller.

In another aspect, a method is implemented using an HVAC field device. The method includes generating an input voltage signal. The method further includes providing the input voltage signal to an analog circuit. The analog circuit includes a first stage, a second stage coupled to the first stage, and a plurality of resistors. Each of the plurality of resistors is coupled to at least one of: the first stage, or the second stage. The method further includes selecting one of: a first mode or a second mode for an operation of the analog circuit. The method further includes generating, using the first stage, an intermediate current based on the input voltage signal 202 and a selection of one of: the first mode, or the second mode. The method further includes generating, using the second stage, an analog output signal, such that the intermediate current. The intermediate current is multiplied by a predefined ratio to define the analog output signal, and the predefined ratio is associated with one or more resistors of the plurality of resistors. The method further includes providing the analog output signal at a terminal, the terminal is associated with the analog circuit.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

Having thus described example embodiments of the invention in general terms, reference will now be made to the accompanying drawings, which are not necessarily drawn to scale, and wherein:
FIG. 1 is a diagram that illustrates a block diagram of a HVAC field device, in accordance with an embodiment of the present disclosure;
FIG. 2A and FIG 2B are diagrams that illustrate a block diagram of the HVAC field device, in accordance with an embodiment of the present disclosure;
FIG. 3 is a diagram that illustrates an exemplary schematic diagram of an analog circuit of the HVAC field device, in accordance with an embodiment of the present disclosure;
FIG. 4 is a diagram that illustrates an exemplary schematic diagram of the analog circuit, in accordance with an embodiment of the present disclosure;
FIG. 5 is a diagram that illustrates an exemplary schematic diagram of the analog circuit, in accordance with an embodiment of the present disclosure;
FIG. 6 is a diagram that illustrates an exemplary schematic diagram of the analog circuit, in accordance with an embodiment of the present disclosure;
FIG. 7 is a diagram that illustrates a perspective view of an add-on module associated with the HVAC field device, in accordance with an embodiment of the present disclosure;
FIG. 8 illustrates a schematic illustration of a cover module of the analog circuit, in accordance with an embodiment of the present disclosure;
FIG. 9A and FIG. 9B are diagrams that illustrate an exemplary circuit diagram of the analog circuit of the HVAC field device, in accordance with an embodiment of the present disclosure; and
FIG. 10 is a diagram that illustrates a flowchart of a method for generating an analog output signal using the analog circuit, in accordance with an example embodiment of the present disclosure.

### DETAILED DESCRIPTION OF EXEMPLARY EMBODIMENTS

Exemplary embodiments of an HVAC field device having a universal analog I/O circuit are described in detail below with reference to the accompanying figures. In addition, the exemplary embodiments described below can be modified in various aspects without changing the essence of the present disclosure.

In the following description, for purposes of explanation, numerous specific details are set forth in order to provide a thorough understanding of the present disclosure. It will be apparent, however, to one skilled in the art that the present disclosure may be practiced without these specific details. In other instances, systems and methods are shown in block diagram form only in order to avoid obscuring the present disclosure.

Some embodiments of the present disclosure will now be described more fully hereinafter with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout. Also, reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification does not necessarily all refer to the same embodiment, nor are separate or alternative embodiments mutually exclusive of other embodiments. Further, the terms "a" and "an" herein do not denote a limitation of quantity but rather denote the presence of at least one of the referenced items. Moreover, various features are described which may be exhibited by some embodiments and not by others. Similarly, various requirements are described which may be requirements for some embodiments but not for other embodiments.

The embodiments are described herein for illustrative purposes and are subject to many variations. It is understood that various omissions and substitutions of equivalents are contemplated as circumstances may suggest or render expedient but are intended to cover the application or implementation without departing from the spirit or the scope of the present disclosure. Further, it is to be understood that the phraseology and terminology employed herein are for the purpose of the description and should not be regarded as limiting. Any heading utilized within this description is for convenience only and has no legal or limiting effect.

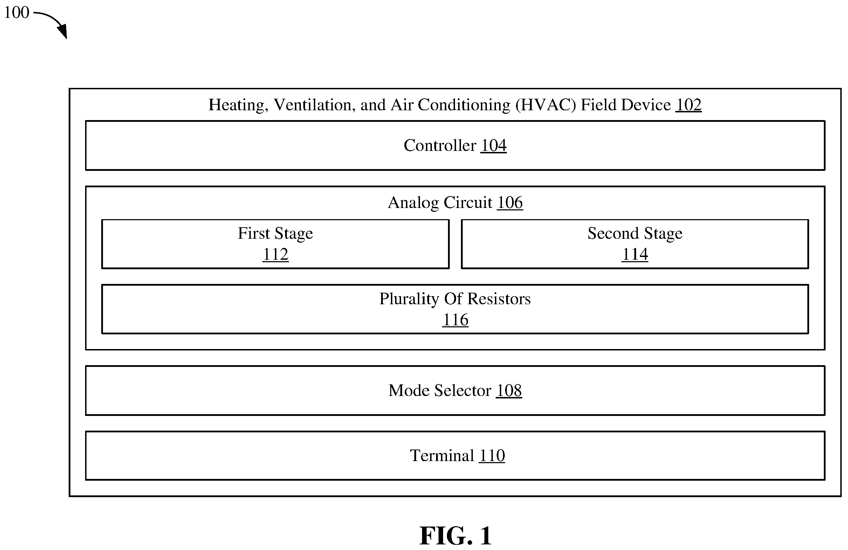

FIG. 1 is a diagram that illustrates a block diagram 100 of an HVAC field device 102, in accordance with an embodiment of the disclosure. The block diagram 100 includes the HVAC field device 102. The HVAC field device 102 includes a controller 104, an analog circuit 106, a mode selector 108, and a terminal 110.

In an embodiment, an HVAC system is used to maintain optimal indoor environments across residential, commercial, and industrial settings. In an example, the HVAC system may include a fluid circuit comprising a pump, a valve, a heat exchanger, and pipes for interconnecting the components of the fluid circuit. The heat exchanger is used for heating or cooling a room. The valve is provided with an actuator, for example, an electrical motor, for opening and closing the valve and thus controlling a flow of a fluid through the fluid circuit, using different positions (or sizes of orifice) of the valve, corresponding to different degrees of opening of the valve. Additionally, the pump can vary the flow through the fluid circuit. Furthermore, the HVAC system may also incorporate air-based systems that utilize dampers, ducts, and fans to regulate airflow.

The HVAC system may further include an optional building control system connected to the valve or the actuator. One skilled in the art may understand that the HVAC system may include a plurality of fluid circuits, having in each case one or more pumps, valves, heat exchangers, and further heat exchangers, such as chillers and/or heaters.

Further, the HVAC system may include multiple different sensors. For example, the heat exchanger is provided with temperature sensors that are arranged at an inlet of the heat exchanger for measuring a supply temperature of the fluid entering the heat exchanger, and at an exit of the heat exchanger for measuring a return temperature of the fluid exiting the heat exchanger. Further, the fluid circuit may include flow sensors for measuring a flow, i.e. a rate of flow of the fluid, through the valve or the fluid circuit. For example, the flow sensor is an ultrasonic flow sensor, an inductive-magnetic flow sensor, or a heat flow sensor.

Further, the HVAC device includes a control device, referred to as the HVAC field device 102 for controlling the valve. Accordingly, the HVAC field device 102 regulates the rate of flow of the fluid through the valve and, thus, through the heat exchanger. Consequently, the HVAC field device 102 regulates an amount of thermal energy per time that is exchanged by the heat exchanger with its environment. The HVAC field device 102 is used for regulating temperature, humidity, air quality, and airflow in an indoor environment where the HVAC system is implemented, ensuring comfort while promoting energy efficiency.

In an embodiment, the HVAC field device 102 may enable real-time monitoring and adjustment of environmental conditions, such as temperature and humidity in an indoor environment for occupant comfort while reducing operational costs. In an example, the HVAC field device 102 may be coupled to a building management system (BMS) installed within a building. Subsequently, the HVAC field device 102 may provide automation and efficiency in climate control within the indoor environment of the building. The HVAC field device 102 may be coupled with an external component, such as a load, when being coupled or connected to sensors, an actuator, a controller, or another field device.

However, the sensors, the actuator, the controller, or another field device may operate in different modes. For example, certain external components may take input in the form of current, whereas certain other external components may take input in the form of voltage. For instance, an external component operating in current mode, i.e., a current-controlled external component, may include actuators and sensors that respond to changes in electrical current. On the contrary, an external component operating in voltage mode, i.e., may include valves and controllers that respond to the change in voltage. Therefore, the HVAC field device 102 is required to adapt to various operational requirements of different types of external components. In other words, the HVAC field device 102 is required to generate a current output or a voltage output dynamically based on a type of external component connected thereto or controlled thereby.

Pursuant to embodiments of the present disclosure, the HVAC field device 102 includes the analog circuit 106. The analog circuit 106 configures the terminal 110 of the HVAC field device 102 as a current output terminal or a voltage output terminal. A design or configuration of the analog circuit 106 provides precise and stable output. Furthermore, the analog circuit 106 may be used in a variety of applications, such as for use in actuators and sensors. These sensors may include, for example, duct sensors, pipe sensors, and wall-mounted room sensors. While the analog circuit 106 can facilitate communication with actuators by providing setpoints via the analog interface. The analog circuit 106 allows an actuator to send signals, such as feedback signals and sensor data to other field devices, connect to passive sensors, and receive necessary sensor data (e.g., differential pressure signals) for controlling the actuator and the setpoints of the actuator.

In applications involving sensors, the analog circuit is primarily used to provide analog measurement signals to other devices, such as field devices or controllers. Additionally, the analog circuit 106 is compatible with digital buses, allowing terminal 110 to function as a digital I/O terminal. The circuit design of the analog circuit 106 may be adapted to be used as a subcircuit or a component for forming or designing a universal I/O circuit for HVAC devices and devices other than the HVAC field device 102. To this end, the implementation of the analog circuit 106 within the HVAC field device 102 should not be construed as a limitation.

In an example, the analog circuit 106 may be utilized in various applications, primarily focusing on signal input and signal output. This includes functions such as signal conditioning, where the circuit processes and modifies input signals to ensure they are suitable for further use or analysis. The analog circuit 106 may include, but is not limited to, resistors, capacitors, inductors, diodes, transistors, and operational amplifiers. The analog circuit 106 is configured to receive an input signal at the terminal 110 that may correspond to different types of inputs, including analog signals, digital signals, or resistive inputs. For instance, the analog signal may encompass an input voltage signal ranging between, for example, 0 to 10 volts (V) DC or 2 to 10 (V) DC, or an input current signal ranging between, for example, 4 milliamperes (mA) and 20 mA. Additionally, the analog circuit 106 can be configured to receive a digital signal that may include a 24V DC signal. The analog circuit 106 is configured to interface with various sensors, such as 10 kilo-ohms (KQ) negative temperature coefficient (NTC) thermistors, 0-200KQ sensors, and PT1000 or NI1000 resistance temperature detectors (RTDs) with resistance values ranging between, for example, 500 to 2000Ω. Moreover, the analog circuit 106 can be configured to generate an output signal that may include both an analog output signal and a digital format output signal.

The output signal may include an analog voltage signal ranging between, for example, 0 to 10 V DC or a digital output signal corresponding to 24 V DC. The output signal may include the analog current signal ranging, for example, between 0 to 20 mA or 4 to 20 mA. Further, the analog circuit 106 can be configurable to provide, for example, a 10V DC sourcing digital output at the terminal 110. The analog circuit 106 may further comprise a sinking 24V AC/DC output. This allows the HVAC field device 102 to effectively interface with various external components while ensuring precise control over the environmental conditions within a building.

In an embodiment, the terminal 110 may serve as a connection point that facilitates a connection or a coupling between but not limited to, the sensors, the actuator, the controller, or another field device. The terminal 110 of the analog circuit 106 and an external component, may enable the transmission of electrical signals and power between the analog circuit 106 and the external component. In an embodiment, the terminal 110 coupled with the analog circuit 106 may correspond to a screw terminal, a barrier terminal, a push-fit terminal block, and a pluggable terminal. The screw terminal may provide secure connections through a screw mechanism. In certain cases, the screw terminal may correspond to a contact on a printed circuit board (PCB) which can be connected using a connector. The terminal 110 utilized in the current application may be designed based on the principles outlined in WO2023/088661A2 (Belimo), which describes an electrical connector for a solder free connection to a printed circuit board (PCB). The barrier terminal may prevent accidental short circuits. The push-fit terminal block may provide quick connections with the analog circuit 106 and the external component. The terminal 110 may include a pluggable block allowing for easy connection and disconnection with the external component for maintenance or inspection. The terminal 110 may be coupled with the analog circuit 106 and provide the connection between the analog circuit 106 and the external component.

In an embodiment, the HVAC field device 102 may further include the controller 104. The controller 104 may be configured to control one or more operations associated with one or more HVAC field devices such as the HVAC field device 102. In an example, the controller 104 is configured to control the operation of the HVAC field device 102. In an embodiment, the controller 104 may include one or more processors, which may serve as a central processing unit (CPU) that executes control algorithms and processes data from multiple sensors. In an embodiment, the one or more processors of the controller 104 may range from simple microcontrollers and basic control circuits, including simple application-specific integrated circuits (ASICs) to more advanced embedded systems capable of running complex operating systems like Linux. The one or more processors may directly impact the ability of the controller 104 to handle real-time analytics, enabling the controller 104 to make precise adjustments based on the external component and environmental conditions.

Furthermore, the controller 104 may include an analog-to-digital converter (ADC). The ADC is configurable to convert an analog signal related to a voltage at the terminal 110 into digital data that the controller 104 (i.e., processor) can interpret. The voltage at the terminal 110 is influenced by interactions at the terminal 110 with attached external components. For example, the analog signal can relate to a setpoint received from a field device or a controller, such as a Building Management System (BMS), when the terminal 110 receives an input voltage or current. Additionally, the ADC can detect a voltage of a digital bus line, measure an output voltage in voltage output mode, or reflect a voltage at an output as a result of outputted current and resistance of the load(s). Thus, the ADC plays a crucial role in enabling the controller to process various signals effectively. The conversion is utilized for accurate monitoring of environmental conditions and for making necessary adjustments to HVAC operations. For instance, when the load (e.g. a temperature sensor) detects that a room's temperature exceeds a set threshold, the ADC converts the analog signal into the digital data that the processor of the controller 104 may analyse to determine whether to activate cooling systems or adjust airflow.

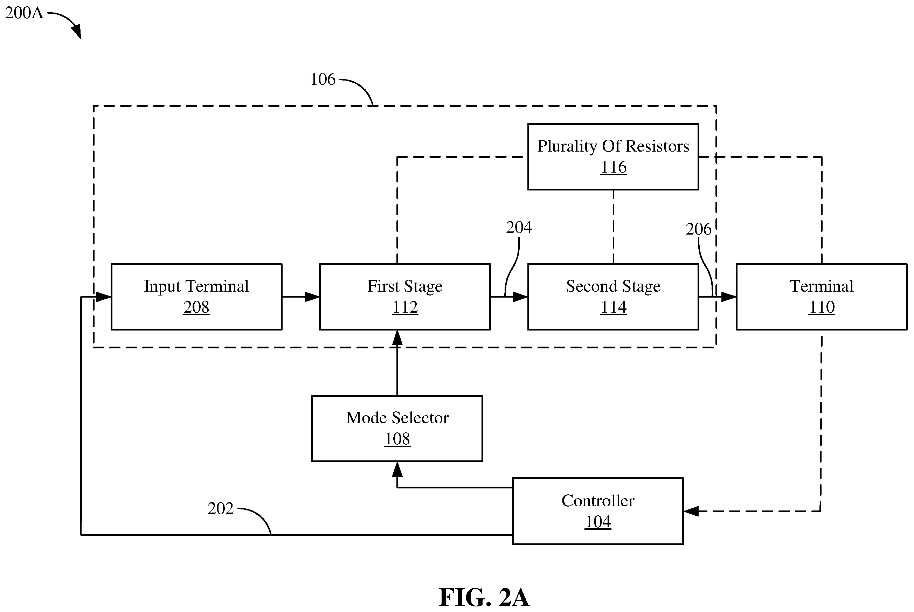

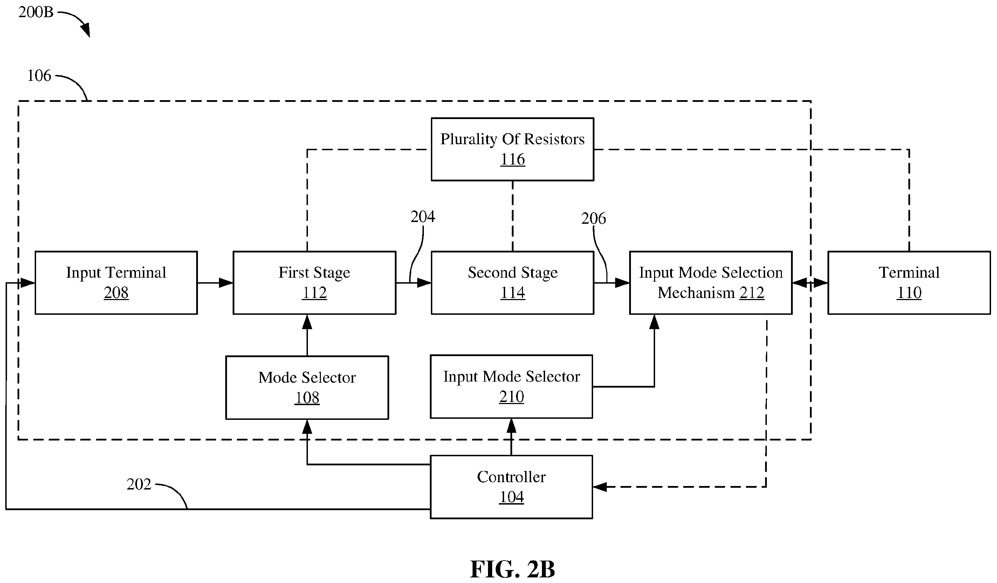

In addition, the controller 104 may include one or more communication interfaces such as UART, SPI, I2C, and Ethernet. Additionally, the controller 104 may support MP Bus for both internal and external communication. Further, the controller 104 may support wireless interfaces such as near-field communication (NFC), Bluetooth, and Wi-Fi. The one or more communication interfaces facilitate communication with sensors, actuators, and other devices within the HVAC system, allowing for seamless integration and coordination of operations. Further details of controller 104 are described in conjunction with FIG. 2.

The HVAC field device 102 may further include a mode selector 108. The mode selector 108 selects between two input signals and outputs one signal based on a mode selection signal. The mode selection signal determines which input is passed to the output. The mode selector 108 may correspond to a multiplexer (MUX) and may be implemented digitally or using hardware components such as, but not limited to, one or more MOSFETs. In digital implementations, logic gates, and flip-flops are used to control the selection of input signals. Alternatively, the MOSFETs may be utilized to switch between different modes by controlling a voltage associated with the MOSFETs, allowing, or blocking the flow of the current. The mode selector 108 is configurable to switch between the first mode and the second mode of the analog circuit 106 based on the mode selection signal. In an example, the mode selector 108 may correspond to a 2:1 multiplexer (MUX). In an example, the mode selector 108 may be coupled with a plurality of input signals and a single output line. The mode selector 108 may be a digital circuit that allows the selection of an input signal from the plurality of input signals and routes the selected input signal to the single output line based on the mode selection signal. It may be noted that the first mode may correspond to the current mode while the second mode may correspond to the voltage mode.

In operation, the controller 104 is configured to generate an input voltage signal 202. The analog circuit 106 is coupled to the controller 104. In an embodiment, the generated input voltage signal 202 is provided to the analog circuit 106. In an example, the input voltage signal 202 corresponds to a pulse width modulated signal (PWM) signal. For instance, the analog circuit 106 is provided with an input voltage signal 202 of, for example, 3.3V 10 kHz. For instance, the input voltage is a result of a duty cycle of the PWM signal, reaching a maximum of 3.3 V when the duty cycle is at 100%. In an example, the controller 104 may be configured to use or control a PWM signal generator to generate the input voltage signal 202 for the analog circuit 106. The PWM signal generator allows the controller to utilize a simple general-purpose Input/Output (GPIO) instead of needing an analog output or digital-to-analog converters (DACs).

Further, the controller 104 is configured to provide the input voltage signal 202 to the analog circuit 106. The analog circuit 106 includes a first stage 112, a second stage 114 coupled to the first stage 112, and a plurality of resistors 116. Further, each resistor of the plurality of resistors 116 is coupled to the first stage 112 and/or the second stage 114. In an embodiment, the analog circuit 106 includes an input terminal coupled to the first stage 112 for receiving the input voltage signal 202. In an embodiment, a set of resistors of the plurality of resistors 116 is coupled with the first stage 112 to facilitate the generation of an intermediate current. The arrangement and resistance values of the set of resistors of the plurality of resistors 116 determine, in function of the selected mode,_the gain of a transconductance amplifier of the first stage. Based on the set of resistors of the plurality of resistors 116 and a selection of a mode, the gain of the transconductance amplifier analog circuit 106 may vary. For example, in the current mode, the gain of the transconductance amplifier is given by a first set of resistors of the plurality of resistors 116.

Further, the analog circuit 106 is configured to select a first mode or a second mode for the operation of the analog circuit 106 based on the mode selection signal. In an embodiment, the controller 104 is configured to generate a mode selection signal for enabling the mode selector 108 to select the first mode or the second mode. Further, the analog circuit 106 is provided with the mode selection signal. Subsequently, the analog circuit 106 processes the input voltage signal 202 and generates the analog output signal based on the mode selection signal. In an embodiment, the first mode corresponds to a current mode, and the second mode corresponds to a voltage mode. In an example, when the mode selector 108 selects a low (e.g., 0V) mode based on the mode selection signal, the mode of the analog circuit 106 is selected to be the first mode, i.e., the analog circuit 106 is configured to generate a current-based analog output signal (a current output signal I_{OUT}). Conversely, when the mode selector 108 selects a high (e.g., 3.3V) mode based on the mode selection signal, the mode of the analog circuit 106 is selected as the second mode, i.e., the analog circuit 106 is configured to generate a voltage-based analog output signal (a voltage output signal V_{OUT}).

Further, the analog circuit 106 is configured to generate the intermediate current using the first stage 112 based on the filtered input voltage signal V_{IN} and a selection of the first mode or the second mode. In an example, the selection of the first mode or the second mode is done based on the mode selection signal to generate the intermediate current. Specifically, feedback of the first stage 112 is defined based on a mode selected based on the mode selection signal. In an embodiment, the first stage 112 corresponds to a transconductance stage. The first stage 112 is configured to generate the intermediate current in response to the input voltage signal received at the input terminal of the analog circuit 106. This allows for the efficient conversion of voltage inputs into proportional current outputs, i.e., the intermediate current.

Further, the second stage 114 is configured to generate the analog output signal (e.g. a voltage output signal V_{OUT} or a current output signal I_{OUT}). In particular, the intermediate current received from the first stage 112 is multiplied by a predefined ratio to define the analog output signal. In an embodiment, the predefined ratio is associated with one or more resistors of the plurality of resistors 116. The second stage 114 is coupled to the first stage 112. Additionally, the second stage 114 is coupled with the plurality of resistors 116, forming a current multiplier configuration. In an embodiment, the second stage 114 of the analog circuit 106 is configured to generate the analog output signal by multiplying the intermediate current received from the first stage 112 by the predefined ratio associated with a first pair of resistors of the plurality of resistors 116. The predefined ratio associated with the first pair of resistors of the plurality of resistors 116 is independent of the selected mode, whether it is the first mode or the second mode. In an example, when the second stage 114 generates the analog output signal in the first mode, such as the current mode, a gain factor of the analog circuit corresponds to a ratio of a value of the analog output signal 206 to a value of the input voltage signal 202. In particular, the gain factor is associated with a first set of resistors of the plurality of resistors 116 in the first mode. In another example, when the second stage 114 generates the analog output signal in the second mode, such as the voltage mode, the gain factor of the analog circuit corresponds to the ratio of the value of the analog output signal 206 to the value of the input voltage signal 202. In particular, the gain factor is associated with a second set of resistors of the plurality of resistors 116 in the second mode. For example, the first set of resistors is exclusive of, i.e., does not include same resistors as, the second set of resistors.

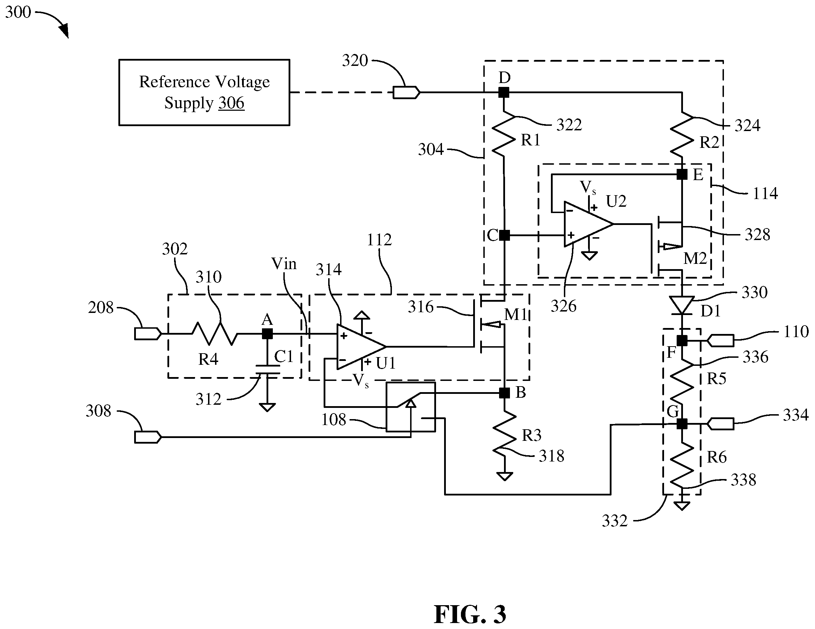

The arrangement of the second stage 114 and the first stage 112 allows for precise control over the analog output signal by adjusting resistor values, thereby influencing a multiplication factor applied to the intermediate current. The integration of one or more resistors of the plurality of resistors 116 with the second stage 114 enables the analog circuit 106 to produce the analog output signal that accurately reflects the desired operational parameters, i.e., current mode of operation or voltage mode of operation. Further, the first stage 112 and the second stage 114 are shared in both the modes (i.e., the current mode and the voltage mode). Further details of the analog circuit 106 are described in conjunction with FIG. 3.

Further, the HVAC field device 102 is configured to provide the analog output signal at the terminal 110. The terminal 110 may function as an input terminal or an output terminal, providing flexibility in HVAC field device 102. By way of example, and not by limitation, the terminal 110 is configured through software to either receive signals, i.e., operate as an input terminal, or transmit signals, i.e., operate as an output terminal. This dual functionality allows for efficient use of limited pins, enabling more flexibility without increasing the number of physical connections. Further, the terminal 110 is coupled to the analog circuit 106. The analog circuit 106 is configurable to provide the analog output signal at the terminal 110. The terminal 110 may be connected to an external component, such as a load, a sensor, an actuator, a controller, another field device, or other components that require the analog output signal for operation. The ability of the analog circuit 106 to output the analog output signal at the terminal 110 ensures that connected external component receive the necessary signals for their functionality. By facilitating the connection between the analog circuit 106 and the load, the terminal 110 enhances the overall versatility and adaptability of the HVAC field device 102. Moreover, a configuration, i.e., as an input mode or an output mode, of the terminal 110 allows for easy integration with different types of external components such as, but limited to, loads, sensors, actuators, field devices, and passive elements, ensuring that the HVAC field device 102 may respond to varying operational requirements. Further, the analog output signal from the analog circuit 106 provides a means of communication between the HVAC system and its connected external components.

FIG. 2A and FIG.2B are diagrams that illustrate a block diagram 200A and a block diagram 200B of the HVAC field device 102, in accordance with an example embodiment of the present disclosure. FIG. 2A and FIG. 2B are described in conjunction with elements of FIG. 1. The HVAC field device 102 may include the controller 104, the analog circuit 106, the mode selector 108, and the terminal 110. Further, the analog circuit 106 may include the first stage 112, the second stage 114, an input terminal 208, and the plurality of resistors 116. Moreover, the HVAC field device 102 may be coupled to the external component via the terminal 110.

In an example, during an output mode of operation of the analog circuit 106, the analog circuit 106 may provide a control signal including a setpoint to the external component coupled to the HVAC field device 102 via the terminal 110. The control signal influences the operation of the external component. The analog circuit 106 may also provide a feedback signal to the external component. The external component may correspond to a load or a passive sensor. The analog circuit 106 may provide a necessary bias current for the passive sensor. Changes in the resistance due to environmental variations can then be determined based on variations in the output voltage.

In an embodiment, the external component coupled to the terminal 110 may correspond to, but is not limited to an actuator. The actuator may be operated using either a current-mode signal or a voltage-mode signal, which can be considered as setpoint signals or control signals. For instance, an HVAC actuator may include a motor assembly that adjusts the position of an actuated external component. The motor and its controller may be designed to receive either a current-mode signal or a voltage-mode signal. The current-mode signal may range from 4 to 20 milliamps. Conversely, the voltage-mode signal may range from 0 to 10 volts. However, these specifications are merely examples and can vary based on the specific application and design requirements. For instance, the choice between the external component operating in current-mode or voltage-mode signals may depend on factors such as the required precision and the signal input type of the connected field device. In an embodiment, the controller 104 is coupled to the analog circuit 106 via the input terminal 208. Moreover, the controller 104 is coupled to the terminal 110. Further, the controller 104 is coupled to the mode selector 108.

In an example, the controller 104 is further configured to generate a mode selection signal. In an example, the mode selection signal is provided to the mode selector 108 whereby the mode selector 108 selects the first mode or the second mode of operation of the analog circuit 106. To this end, the selection of the first mode or the second mode by the mode selector 108 causes the selection of a first feedback path or a second feedback path of the analog circuit 106. For example, if the controller 104 generates the mode selection signal associated with the first mode, the mode selector 108 is configured to select the first feedback path. Alternatively, if the controller 104 generates the mode selection signal associated with the second mode, the mode selector 108 is configured to select the second feedback path. Moreover, the mode selection signal may correspond to a signal which may determine a mode, e.g., current or voltage, of an analog output signal 206 generated by the analog circuit 106.

The controller 104 is configured to generate an input voltage signal 202. The input voltage signal 202 is provided to the input terminal 208 of the analog circuit 106 for operation thereof. It may be noted that the input terminal 208 is coupled to (or is a part of) the first stage 112. Subsequently, based on the input voltage signal 202, the first stage 112 is configured to generate an intermediate current 204. In an embodiment, the input voltage signal 202 may be a PWM signal. Further, the first stage 112 is coupled to the mode selector 108 which selects a feedback path for the first stage 112. It may be noted that a mode or the feedback path selected based on the mode selection signal is also used to generate the intermediate current 204 in the first stage 112. In this regard, the analog circuit 106 is configured to adjust a voltage level associated with the selected feedback path to match with a value of the input voltage signal 202. The selected feedback path matches with the value of the input voltage signal 202 based on the mode selection signal in the first stage 112.

Further, the first stage 112 is coupled to the second stage 114. As a result, the intermediate current 204 generated by the first stage 112 is provided to an input of the second stage 114. Further, the second stage 114 is configured to generate the analog output signal 206 which is provided at the terminal 110.

In an example, the second stage 114 is configured to implement a current multiplier configuration. The current multiplier configuration is configured to generate the analog output signal 206 at the terminal 110. In an embodiment, the current multiplier configuration may include one or more resistors of the plurality of resistor 116. It may be noted that each of the first stage 112 and the second stage 114 may be implemented using an operational amplifier (op-amp) and one or more transistors, such as field effect transistors (FETs), bi-polar junction transistors (BJTs), Metal Oxide Semiconductor Field Effect Transistors (MOSFETs), and the like.

A current multiplier configuration is an electronic circuit designed to produce an output current that is a multiple of an input current. Unlike a current mirror, which replicates the input current, a current multiplier amplifies the input current by a specific gain factor, which may be set using resistors or other components. The current multiplier configuration may include multiple components that are arranged to control the gain through feedback mechanisms. The use of the current multiplier configuration is in particular advantageous for amplifying small currents and enabling their use in circuits that demand higher output currents.

In the second stage, the one or more resistors, the op-amp, and the one or more transistors may be configured to amplify the intermediate current 204 with a predefined ratio, to output the analog output signal 206 such that a gain factor of the analog circuit 106 corresponds to a ratio defined by the one or more resistors of the plurality of resistors 116.

Pursuant to embodiments of the present disclosure, the analog circuit 106 is well suited for implementation using discrete elements. This allows for flexibility in circuit design, enabling the use of individual elements to achieve desired functionality and performance, making it suitable for various applications while ensuring efficient operation and ease of customization. Further, the current multiplier configuration is implemented using a first pair of resistors from the plurality of resistors 116. The first pair of resistors includes a first resistor and a second resistor. The first resistor forms a first path for a flow of the intermediate current 204 therethrough, and the second resistor forms a second path parallel to the first path. Moreover, the second path causes a flow of the analog output signal 206 therethrough. Further, the current multiplier configuration includes a feedback mechanism for adjusting a biasing of the second stage 114. For example, the feedback mechanism is configurable to maintain a voltage level across the first resistor equal to a voltage level across the second resistor.

In an embodiment, the analog circuit 106 is configured to generate the analog output signal 206, allowing for multiple output modes to accommodate various operational requirements. At terminal 110, the analog circuit 106 may provide a digital output of 20mA at 10V DC, which is essential for reliable signalling to devices that require a digital control signal. This configuration enables the analog circuit 106 to connect to and control the external component, such as relays or indicators. Additionally, the analog circuit 106 offers a 24 VAC/DC digital output, such as 50mA at 24VAC/DC. This configuration enables the analog circuit 106 to operate as a sinking output option. Subsequently, in the sinking output configuration, the analog circuit 106 is configured to control the external component which operates on alternating current or requires higher voltage levels for effective performance.

In certain cases, the analog circuit 106 is configured to operate in various configurations. For example, the analog circuit 106 may be set up to receive a 0-10 V DC analog input from various active sensors. Additionally, the input can also include control or feedback signals from other field devices or controllers. The analog input may be used for direct voltage measurements from sensors for precise monitoring of environmental conditions. This capability is crucial in the HVAC system where accurate temperature and humidity readings are necessary for optimal system performance. Further, the analog circuit 106 is configurable to receive the analog input in a range of, for example, 4mA to 20mA. Such a range of the analog input supports current loop signals commonly used in process control systems. Such analog input ensures accurate transmission of data over long distances, minimizing signal degradation and interference.

Further, the analog circuit 106 is configurable to support resistive inputs that may be received from, for example, but not limited to, one or more temperature sensors (such as 10kQ NTC thermistors) that change resistance with temperature variations. Additionally, the analog circuit 106 may interface with PT1000 and NI1000 RTDs that operate within resistance ranges of, for example, 500Ω - 2000Q, allowing for precise temperature monitoring in various environments. Furthermore, the analog circuit 106 may support 10kQ thermistors, which are effective in measuring temperature changes across a wide range of temperature values.

Further, the analog circuit 106 operating in 24 VDC digital input configuration enables the terminal 110 to receive digital signals from devices operating on AC or DC power supplies. This enables seamless integration of the analog circuit 106 into existing systems and enhances the overall functionality of the HVAC field device 102. The design of the analog circuit 106 as a universal I/O circuit significantly enhances its configurability and adaptability within HVAC applications. By allowing dynamic reconfiguration between different configurations of input mode and output mode, such as based on operational needs or user preferences, the HVAC field device 102 may maintain optimal performance of the HVAC system while reducing installation complexity and costs.

In one embodiment, the controller 104 may include a processor, a memory, an I/O interface, and a communication interface. The processor of the controller 104 may be configured to perform one or more operations associated with the HVAC field device 102. The processor may be embodied as one or more of various hardware processing means such as a coprocessor, a microprocessor, a digital signal processor (DSP), a processing element with or without an accompanying DSP, or various other processing circuitry including integrated circuits such as, for example, an ASIC, an FPGA (field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally, or alternatively, the controller 104 may include one or more processors configured in tandem via a bus to enable independent execution of instructions, pipelining, and/or multithreading. Additionally, or alternatively, the processor may include one or more processors capable of processing large volumes of workloads and operations to provide support for big data analysis. In an example embodiment, the processor may be in communication with the memory via a bus for passing information among components of the controller 104.

For example, when the processor executes software instructions, the instructions may specifically configure the processor to perform the algorithms and/or operations described herein when the instructions are executed. However, in some cases, the processor may be a processor-specific device (for example, a mobile terminal or a fixed computing device) configured to employ an embodiment of the present disclosure by further configuration of the processor by instructions for performing the algorithms and/or operations described herein. The processor may include, among other things, a clock, an arithmetic logic unit (ALU), and logic gates configured to support the operation of the processor. A network environment in which the HVAC field device 102 is operating may be accessed using the communication interface of the controller 104. The communication interface may provide an interface for accessing various features and data stored in the controller 104.

In some example embodiments, the I/O interface may include a display and, in some embodiments, may also include a keyboard, a mouse, a touch screen, touch areas, soft keys, or other input/output mechanisms. In one embodiment, the controller 104 may include a user interface circuitry configured to control at least some functions of one or more I/O interface elements such as the display. The processor and/or an I/O interface circuitry including the processor may be configured to control one or more operations of one or more I/O interface elements through computer program instructions (for example, software and/or firmware) stored on the memory accessible to the processor.

In an embodiment, the I/O interface is specifically designed to enable communication with external I/O devices. This functionality allows for the integration of various peripherals and components, enhancing the overall capabilities of the analog circuit 106. For example, an external I/O device can be configured to interact directly with the controller 104, facilitating seamless data exchange and control. This interaction is important for applications that require real-time monitoring, data acquisition, or control of external systems. By establishing a reliable communication link between the I/O interface and external devices, the controller 104 can effectively gather information, respond to inputs, and execute commands as needed.

The communication interface may include the input interface and output interface for supporting communications to and from the controller 104 or any other component with which the controller 104 may communicate. The communication interface may be any means such as a device or circuitry embodied in either hardware or a combination of hardware and software that is configured to receive and/or transmit data to/from a communications device in communication with the controller 104. In this regard, the communication interface may include, for example, a wired communication interface and/or a radio communication device for providing communication functionalities to the controller of the HVAC field device 102. In particular, the communication interface includes one or more of a wired communication interfaces (such as a USB, an Ethernet, in particular, a Power over Ethernet (PoE), Single Pair Ethernet (SPE), a BUS, in particular, an MP-Bus, BACnet, KNX or Modbus interface), a Wide Area Network communication circuit (such as GSM, LTE, 3G, 4G or 5G mobile communications circuit), a Low Power Wide Area Network (such as Narrowband Internet of Things (NB- IoT), Long Range (LoRa), Lora WAN, Sigfox, or Long Term Evolution Category M1 (LTECatM1)), a local area network communication circuit (such as Wireless LAN), a short-range wireless communication circuit (such as Bluetooth, Bluetooth low energy (BLE), Ultra-wideband (UWB), Thread and/or Zigbee), and/ or a close-range wireless communication circuit (such as Radio Frequency Identification (RFID) or a Near Field Communication (NFC)). For example, the communication interface may enable to establish connection between the HVAC field device 102 and a computing device running a Building Management System (BMS), either directly or via a gateway device 120 using a wired (such as a BUS connection) or a wireless communication interface.

In an embodiment, the communication interface may include an antenna (or multiple antennae) and supporting hardware and/or software for enabling communications with a wireless communication network. Additionally, the communication interface may include a circuitry for interacting with the antenna(s) to cause transmission of signals via the antenna(s) or to handle receipt of signals received via the antenna(s). In some environments, the communication interface may alternatively or additionally support wired communication. As such, for example, the communication interface may include a communication modem and/or other hardware and/or software for supporting communication via cable, digital subscriber line (DSL), universal serial bus (USB), or other mechanisms. In some embodiments, the communication interface may enable communication with a cloud-based network to enable deep learning.

The analog circuit 106 generates the analog output signal 206, for example, to meet specific requirements of the external component connected to the terminal 110 or user inputs. The design of the analog circuit 106 may provide precise and stable outputs while remaining cost-effective due to its low complexity. The terminal 110 is configured to receive the analog output signal 206 from the analog circuit 106 (e.g. the voltage output V_{OUT} or the current output I_{OUT}) for providing an output to the external component (e.g. an external off-chip circuitry). This allows the analog circuit 106 to interface effectively with the external component, such as actuators and sensors, including duct sensors and wall-mounted room sensors.

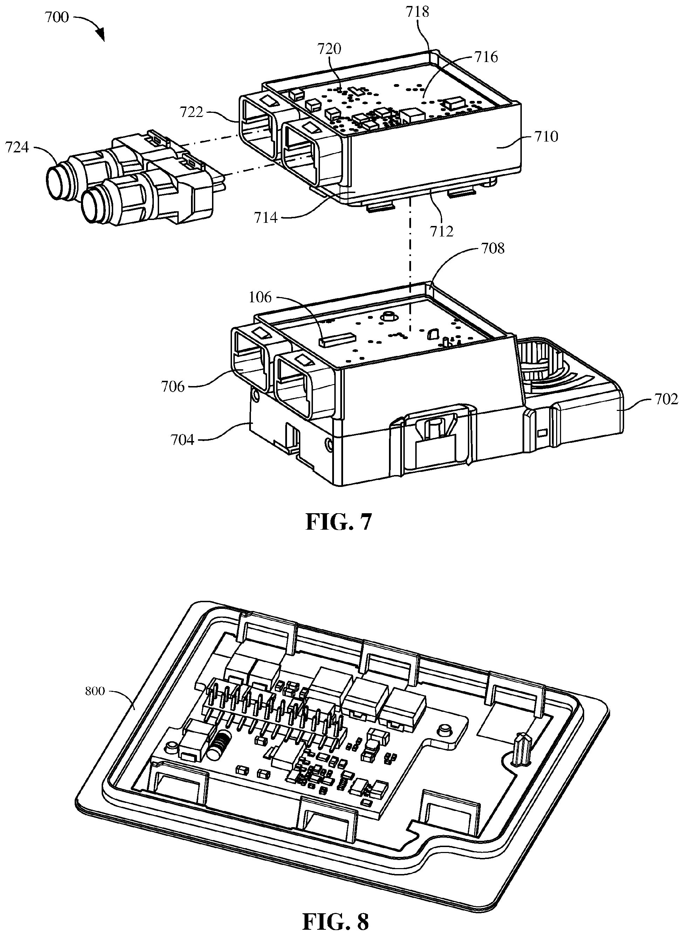

In an embodiment, the HVAC field device 102 may include one or more terminals, for various functionalities. For instance, the terminal 110 and the input terminal 208 may correspond to the one or more terminals. Herein, the input terminal 208 is coupled to the controller 104 enabling direct communication and control between the controller 104 and the analog circuit 106. Furthermore, the one or more terminals may include a terminal for connecting to add-on modules, which may be used to enhance the functionality of the HVAC field device 102. The add-on modules may provide additional features or capabilities that are further described in FIG. 8. The one or more terminals allow for easy upgrades and expansions of the HVAC field device 102 without significant redesign. Moreover, the one or more terminals may include a reference terminal that is coupled to a reference voltage supply. Further, the reference voltage supply is configured to provide a reference voltage at the reference terminal, and the reference terminal provides the reference voltage to the analog circuit 106. In an embodiment, the input voltage signal, or a reference voltage for input to the analog circuit 106 may be generated by the analog circuit 106 or a sub-circuit thereof, using the reference voltage supply 306.

Referring to FIG. 2B, wherein the analog circuit 106 is dynamically configurable to operate in one of: an input mode to receive an input signal from an external source at the terminal 110, or an output mode to supply the analog output signal to the external component via the terminal 110. The controller 104 is configured to generate the mode selection signal which is then supplied to the mode selector 108. Further, the controller 104 is configured to generate an input mode control signal that is supplied to the input mode selector 210. For the input mode the controller is configured to generate the mode selection signal to set the mode selector 108 to select the first mode. Further, the controller 104 is configured to generate the input mode control signal to select between a current input mode or a voltage input mode, allowing the analog circuit 106 to function either in the current input mode or the voltage input mode based on the specific requirements of the HVAC field device 102. In an embodiment, the input voltage signal 202 is set to 0 volts. In another embodiment, the controller 104 is configured to set the input voltage signal 202 to 0 volt.

The analog circuit 106 comprises an input mode selection mechanism 212, which provides the transition between the current input mode or the voltage input mode. The input mode control signal applied at the input mode selector 210 is configured to select between the current input mode and the voltage input mode, using the input mode selection mechanism 212.

An input mode control signal such as a HIGH state signal is supplied to the input mode selector 210 to activate the current input mode using the input mode selection mechanism 212. To select the voltage input mode, an input mode control signal such as a LOW state signal is supplied to the input mode selector 210 to activate the voltage input mode using the input mode selection mechanism 212.

The input mode selection mechanism 212 thus serves in combination with the mode selector 210 as an important component in the analog circuit 106. It allows for seamless switching between the voltage input mode and the voltage input mode. This flexibility enhances the overall functionality of the analog circuit, making it suitable for a wide range of applications that require precise control and monitoring of analog signals.

Exemplary one or more modes of the analog circuit 106 are shown in a table T1.

**Table T1**

| Mode | Mode Selectio n Signal | Input mode control signal | Applied input voltage Vᵢₙ | I_{bias}(mA) | Measurement/Input Range (nominal range) |
|---|---|---|---|---|---|
| Current Output Mode | LOW | LOW | 0.6 to 3V | | Iₒᵤₜ = 4 to 20mA |
| Voltage Output Mode | HIGH | LOW | 0 to 2.5V | | Vₒᵤₜ = 0 to 10V |
| Current Input Mode | LOW | HIGH | 0 | | Iᵢₙ = 4 to 20mA |
| Voltage Input Mode | LOW | LOW | 0 | | Vᵢₙ =0 to 10V |
| PT1000 - Temperature measurement mode | LOW | LOW | V_{bias_pt1000} = 93.75mV | I_{bias max}= 0.625mA | e.g. -50 to 160°C |
| | | | | | 0.5V@800Ω (-50°C) |
| | | | | | 1V@1600Ω (160°C) |
| Resistance measurement mode | LOW | LOW | V_{bias_680Ω}= 81mV | I_{bias_680kΩ} =542µA | R=680 Ω to 200kΩ (Or -35°C to 100°C, if NTC 10K) |
| | | | V_{in_bias_10kΩ}= 21mV | I_{bias_10kΩ} =141µA | |
| | | | V_{in_bias_200kΩ}= 4.7mV | I_{bias_200kΩ} =326µA | |

The table T1 provides a detailed overview of the one or more modes of the analog circuit 106, outlining the corresponding mode selection and input mode control signals, applied input voltage signals levels, generated bias currents for resistance or temperature measurements, and measurement/input ranges. The table T1 serves as a reference for configuring the analog circuit based on specific application requirements, such as current and voltage input/output modes, temperature measurement, and resistance measurement. The table T1 includes selection signals (mode selection signal and input mode control signal), which are based on the mode selector 108 and input mode selector 210 to define the analog circuit's functionality. Depending on the mode selected, different input voltage levels (Vᵢₙ) are applied after filtering, ensuring compatibility with the respective measurement or output range. In an embodiment, in current output mode, a LOW signal is applied to the mode selection and the input mode control signal, and the analog circuit 106 operates with an applied input voltage level (Vᵢₙ) after filtering of 0.6V to 3V, producing an output current within the range of 4 to 20mA, which is commonly used in industrial automation for long-distance signal transmission. Similarly, the voltage output mode is activated by setting the mode selection signal to HIGH while setting the input mode control signal to LOW. This mode allows an input voltage of 0 to 2.5V, generating an output voltage in the range of 0 to 10V, which is widely used for interfacing with voltage-sensitive components. For input signal processing, the current input mode, with a LOW signal at the mode selection signal and a HIGH signal at the input mode control signal, configures the analog circuit 106 to accept an input current of 4 to 20mA. In voltage input mode, the mode selection signal and input mode selection signal are set to LOW, allowing an input voltage range of 0-10V. These modes are essential for handling analog signals from various sensors and field devices. The table T1 further describes the PT1000 temperature measurement mode, where a LOW signal at both mode selection signal and input mode control signal is applied, while an input voltage signal 202 is applied to terminal 208 to generate a filtered input voltage Vᵢₙ (V_{in_bias_pt1000}) of 93.75mV, which yields to a maximum current bias (I_{bias} max) of 0.625mA. In this example, the temperature measurement range extends from -50°C to 160°C, with resistance values ranging from 800 Ohms at -50°C to 1600 Ohms at 160°C. Additionally, the resistance measurement mode is outlined with different applied voltage biases depending on resistance values. For example, a 10kΩ resistance corresponds to a V_{in_bias} of 21mV and an I_{bias} of 141µA, while a 680Ω resistance has a V_{in_bias} of 81mV and an I_{bias} of 542µA. In this example, the resistance measurement range varies from 680Ω to 200kΩ, which can be used for applications such as NTC thermistor-based temperature measurement. The applied voltage biases and the corresponding bias currents may be pulsed to reduce the average current and avoid self-heating of the resistance element. For PT1000 sensors, for example, the average bias current needs to be below 300 µA.

FIG. 3 is a diagram that illustrates an exemplary schematic diagram 300 of the analog circuit 106 of the HVAC field device 102, in accordance with an embodiment of the present disclosure. FIG. 3 is described in conjunction with elements of FIG. 1, FIG. 2A, and FIG. 2B.

In an embodiment, the controller 104 is configured to generate the input voltage signal 202. Further, the controller 104 is configured to provide the input voltage signal 202 to the analog circuit 106 via the input terminal 208. For instance, the input voltage signal 202 may be a pulse width modulation (PWM) signal. In another embodiment, the controller 104 is configured to control a duty cycle of the input voltage signal 202 (e.g. a duty cycle of the PWM signal). In an example, the controller 104 is configured to adjust the output voltage and a current supplied to the external component connected to the terminal 110 by varying the duty cycle of the input voltage signal 202. By way of example, and not by limitation, the controller 104 utilizes internal timers and registers to produce a square wave signal that alternates between a HIGH state and a LOW state. The HIGH state may correspond to, but is not limited to, 3.3V and the LOW state may correspond to, but is not limited to, 0V. Furthermore, by adjusting the proportion of time that the input voltage signal 202 remains in the HIGH state during each cycle, the controller 104 can modulate the filtered input voltage delivered to the analog circuit 106. For instance, a duty cycle of 75% means that the PWM signal is HIGH for three-quarters of the cycle duration, resulting in a filtered input voltage that is 75% of the HIGH state voltage. Conversely, a 25% duty cycle indicates a lower average input voltage supplied to the analog circuit 106.

In an embodiment, although not shown, the HVAC field device 102 may include a PWM signal generator. The PWM signal generator is configured to generate the input voltage signal 202. The PWM signal generator may control the supply of the input voltage signal 202 to the analog circuit 106. In this configuration, the PWM signal generator toggles rapidly between the ON state and OFF state. The ratio of the ON time to the total cycle time determines the effective average voltage generated, which is an analog voltage generated from a digital input.

In another embodiment, although not shown, the HVAC field device 102, in particular, the controller 104 includes a digital-to-analog converter (DAC). In this regard, the controller 104 is configured to generate the input voltage signal 202 using the DAC instead of using the PWM signal generator. For instance, the DAC is configured to receive a digital signal from the controller 104. The DAC is configured to convert the digital signal into an analog signal that corresponds to the input voltage signal 202, which is then provided to the analog circuit 106.

In an embodiment, the analog circuit 106 can be powered by a single power supply to output the analog output signal 206 while maintaining high precision. This power supply may be either regulated or unregulated. In an example, the single power supply may form or correspond to the reference voltage supply 306. The analog circuit 106 is designed to ensure that the analog signal is produced with high accuracy, and the gain is determined by a combination of the plurality of resistors 116. This configuration allows for effective signal conditioning and amplification, ensuring that the output meets the required specifications for various applications.

Further, the analog circuit 106 includes a low pass filter 302 coupled to the input terminal 208 of the first stage 112. The low pass filter 302 is an electronic circuit configured to allow signal components with frequencies lower than a cutoff frequency to pass therethrough while attenuating (e.g. reducing) signal components of the input voltage signal 202 with frequencies higher than the cutoff frequency. In an example, the low pass filter 302 may be configured to filter the PWM signal received from the controller 104 at the input terminal 208. Further, the low pass filter 302 is configured to output a signal having a frequency lower than the cutoff frequency and provide the signal to the first stage 112 of the analog circuit 106.

In an embodiment, the low pass filter 302 may be implemented using various methods, including passive components like one or more resistors and one or more capacitors. In an example, the low pass filter 302 is implemented using a resistor, R₄, 310 (hereinafter referred to as resistor 310), and a capacitor, C₁, 312 (hereinafter referred to as capacitor 312). The cutoff frequency may be adjusted based on a selection of a resistance value of the resistor 310 and a capacitance value of the capacitor 312.

In another embodiment, the low pass filter 302 may be implemented using an active component such as, but not limited to, an operational amplifier, or a transistor.

In an embodiment, the resistance value of the resistor 310 is 10 kΩ and the capacitance value of the capacitor 312 is 1 microfarad (µF). The input terminal 208 receives the input voltage signal 202 as the PWM signal at 3.3V, having 20 kilohertz (kHz) frequency. In such a case, the cutoff frequency of the low pass filter 302 may be configurable according to the resistance value associated with the resistor 310 and the capacitance value of the capacitor 312.

In an example, a predetermined cutoff frequency for a resistor-capacitor (RC) circuit may be calculated based on: ${F}_{c} = \frac{1}{2 πRC}$
where F_{c} = predetermined cutoff frequency,
R= resistance value associated with the resistor, and
C =capacitance value associated with the capacitor.

It may be noted, the low pass filter 302 is configured to convert the PWM signal into the filtered input voltage signal, Vin. By smoothing out rapid fluctuations inherent in the PWM signal, the low pass filter 302 ensures that only the desired low-frequency components are allowed to pass while higher-frequency noise is effectively eliminated.

In an embodiment, the input terminal 208 (represented as a node A) of the analog circuit 106 may be coupled to the resistor 310 and the capacitor 312. For instance, an output of the low pass filter 302 is coupled to the first stage 112. In an example, the first stage 112 is configured to generate the intermediate current 204 based on the filtered input voltage signal V_{IN}, received from the low pass filter 302 and a mode selected by the mode selector 108.

In an embodiment, the first stage 112 is configured as a current sink. Further, the first stage 112 includes a second amplifier circuit 314 having a second positive terminal coupled to the controller 104 to receive the input voltage signal 202, a second negative terminal coupled to the mode selector 108, and a second output terminal. For instance, the second amplifier circuit 314 corresponds to an operational amplifier, U₁. It may be noted that in some cases the second positive terminal is coupled to the controller 104 via the low pass filter 302 to receive the input voltage signal 202.

Further, the first stage 112 includes a second transistor circuit 316. Pursuant to the present example, the second transistor circuit 316 is implemented using a MOSFET, however, this should not be construed as a limitation. In other embodiments, the second transistor circuit 316 may be implemented using an FET, a BJT, a Darlington transistor, and the like. The second transistor circuit may have a second control terminal, a third terminal, and a fourth terminal. According to the present example, the second control terminal may correspond to a gate terminal of the MOSFET, the third terminal may correspond to a drain terminal of the MOSFET, and the fourth terminal may correspond to a source terminal of the MOSFET. The second control terminal (or the gate terminal) is coupled to the second output terminal of the second amplifier circuit 314. Moreover, the fourth terminal (or the source terminal) of the second transistor circuit 316 is coupled to a current feedback resistor, R₃, 318, and the third terminal (or the drain terminal) of the second transistor circuit 316 is coupled to the second stage 114.

In an embodiment, the filtered input voltage signal V_{IN} may be applied to the second positive terminal of a second amplifier circuit 314. The second positive terminal corresponds to a non-inverting input (indicated by "+"), coupled to the output of the low pass filter 302 to receive the filtered input voltage signal V_{IN}, from the low pass filter 302. In an example, the second negative terminal is coupled to the mode selector 108. For example, the second negative terminal may correspond to an inverting input (indicated by "-"). Additionally, the second amplifier circuit 314 may receive a positive supply voltage V_{CC} and a negative supply voltage V_{GND}. In one case, the negative power supply voltage V_{GND} is grounded. However, it is contemplated that any suitable positive supply voltage V_{CC} and negative supply voltage V_{GND} may be used, as desired. In some cases, the second amplifier circuit 314 may be configured to generate an output voltage at the second output terminal that maintains a voltage level at the second positive terminal equal to a voltage level at the second negative terminal. Further, the second output terminal is coupled to the second transistor circuit 316.

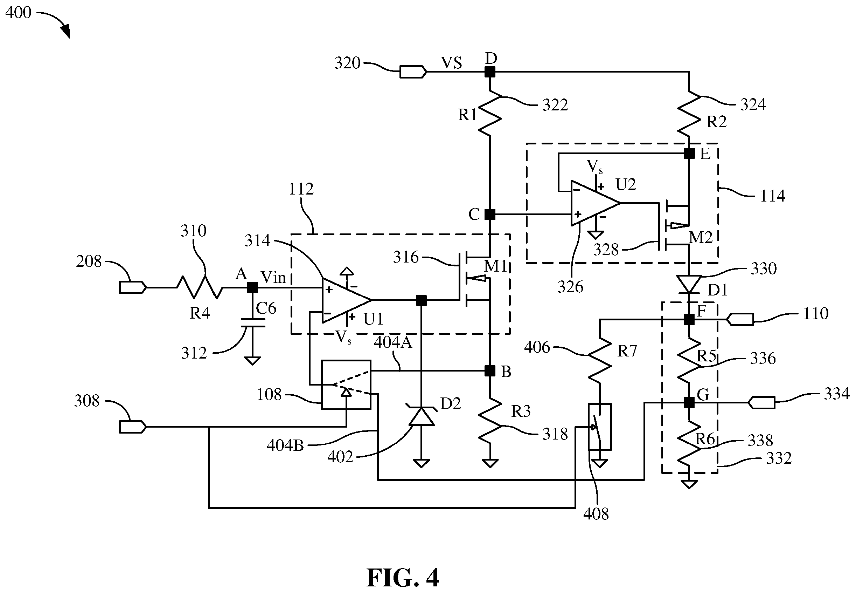

In an embodiment, the second negative terminal of the second amplifier circuit 314 is coupled to the mode selector 108. The mode selector 108 is configured to select or switch between the first feedback path and the second feedback path based on the mode selection signal. For example, when the mode selector 108 selects the first mode, thereby selecting the first feedback path, the second negative terminal of the second amplifier circuit 314 gets coupled to a node B between the fourth terminal of the second transistor circuit 316 and the current feedback resistor 318. Conversely, when the mode selector 108 selects the second mode, thereby selecting the second feedback path, the second negative terminal of the second amplifier circuit 314 gets coupled to a first junction, shown as node G. When the mode selector 108 transitions to a selection of the first mode (the current mode) from the second mode (the voltage mode), the second amplifier circuit 314 is configured to maintain a voltage level at the node B to be equal to a voltage level at the second positive terminal of the second amplifier circuit 314 (i.e., the filtered input voltage signal V_{IN}). Conversely, when the mode selector 108 switches to the second mode (the voltage mode) from the first mode (the current mode), the second amplifier circuit 314 is configured to maintain a voltage at node G equal to the voltage level at the second positive terminal of the second amplifier circuit 314. Further, details are described in conjunction with FIG. 4.

Continuing further, the third terminal of the second transistor circuit 316 of the first stage 112 is coupled to the second stage 114 of the analog circuit 106. In an embodiment, the second stage 114 is configured to implement a current multiplier configuration 304. The second stage 114 includes a first amplifier circuit 326 having a first positive terminal, a first negative terminal, and a first output terminal. The second stage 114 includes a first transistor circuit 328 having a first control terminal, a first terminal, and a second terminal. The first control terminal is coupled to the first output terminal of the first amplifier circuit 326. In an embodiment, the first amplifier circuit 326 corresponds to an op-amp. In such a case, the first positive terminal corresponds to a non-inverting terminal (indicated as "+") and the first negative terminal corresponds to an inverting terminal (indicated as "-") of the op-amp. Further, the first transistor circuit 328 corresponds to a MOSFET. For example, the control terminal corresponds to a gate terminal of the MOSFET, the first terminal corresponds to a source terminal of the MOSFET, and the second terminal corresponds to a drain terminal of the MOSFET. The first control terminal, i.e., the gate terminal, is coupled to the first output terminal of the first amplifier circuit 326.

In an example, the first positive terminal, i.e., the non-inverting terminal, of the first amplifier circuit 326 is coupled to the third terminal of the second transistor circuit 316, i.e., the drain terminal of the MOSFET of the first stage 112. Moreover, the first negative terminal, i.e., the inverting terminal, of the first amplifier circuit 326 is coupled to a feedback path associated with the first terminal, i.e., the source terminal, of the first transistor circuit 328. Additionally, the first amplifier circuit 326 may receive a positive supply voltage, V_{CC}, and a negative supply voltage, V_{GND}.

Further, the second stage 114 includes a first pair of resistors from the plurality of resistors 116. The first pair of resistors may include a first resistor 322, R₁, coupled to the first positive terminal. For example, the first resistor 322 is coupled to the first stage 112 at the third terminal (or the drain terminal) of the second transistor circuit 316 and the second stage at the first positive terminal of the first amplifier circuit 326. The first pair of resistors may also include a second resistor 324, R₂, coupled to the first terminal of the first transistor circuit 328.

The analog circuit 106 may be connected to a reference voltage supply 306. The reference voltage supply 306 may provide a reference voltage to the analog circuit 106 to power the operations of components, such as the first amplifier circuit 326, the first transistor circuit 328, the second amplifier circuit 314, and the second transistor circuit 316. In an embodiment, the first resistor 322 and the second resistor 324 are coupled to the reference voltage supply 306 via the first terminal 320. In an example, the reference voltage supply 306 is configured to provide a stable and precise voltage signal in the form of the reference voltage. To configure the reference voltage supply 306, a voltage regulator or a dedicated reference integrated circuit (IC) may be used. For example, the Zener diode may be used to regulate the voltage in the analog circuit 106. These components are designed to maintain a constant output voltage regardless of variations in the reference voltage supply 306, temperature, or load conditions. For instance, a reference voltage supply set to 15V would ensure that the output remains at 15V with minimal fluctuations.

The current multiplier configuration 304 implemented using the second stage 114 defines a first path and a second path. In particular, the first resistor 322 forms the first path for the flow of the intermediate current 204 towards the first positive terminal. The intermediate current flows towards the ground, via the first positive terminal, such as from the point D to point B or the ground. On the other hand, the second resistor 324 forms the second path parallel to the first path for a flow of the analog output signal 206 towards the first terminal, such as from the point D to point E. For instance, the current from the first terminal 320 is the sum of the currents through the first path and the second path. To this end, the analog output signal 206 generated using the current multiplier configuration 304 is dependent on a ratio of a resistance value associated with the first resistor 322 and a resistance value associated with the second resistor 324, allowing for precise control over output characteristics of the analog output signal 206 based on these resistance values. For instance, this allows a high precision output signal, with a precision of less than 0.1% over a temperature range of, for example, 0°C to 50°C.

The second stage 114 also includes a feedback path between the first negative terminal of the first amplifier circuit 326 and the first terminal of the first transistor circuit 328. The feedback path is preferably configured to adjust a first voltage across the first path substantially equal to a second voltage across the second path. For example, the first resistor 322 forms a path for the flow of intermediate current 204 towards the non-inverting terminal of the op-amp. The second resistor 324 forms the second path parallel to the first path for the flow of the analog output signal 206 towards the source terminal of the MOSFET.

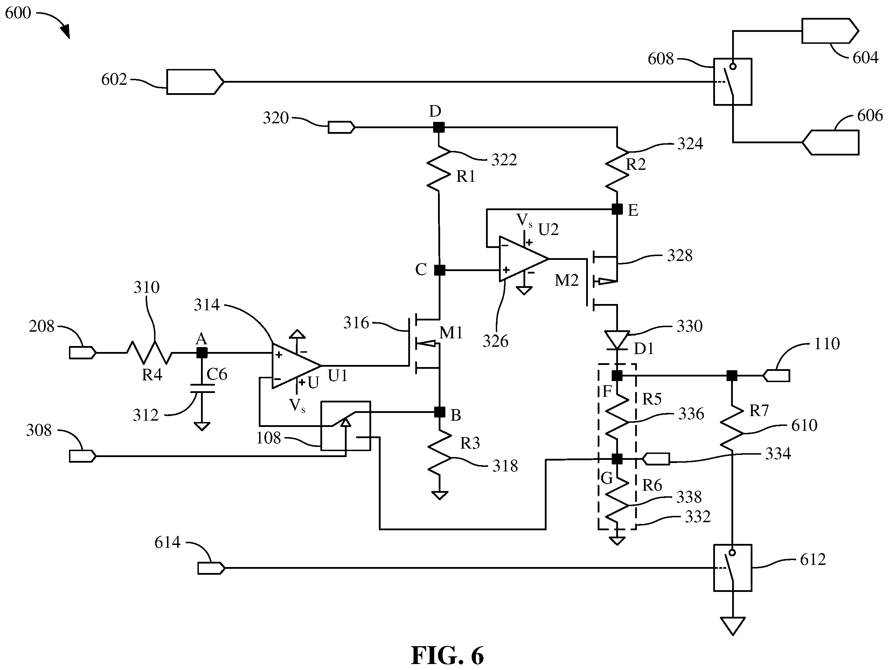

In an embodiment, the analog circuit 106 may further include a diode 330. In an example, the second terminal of the first transistor circuit 328 is coupled to the diode, D₁, 330. Subsequently, the analog output signal 206 is passed through the diode 330. The diode 330 serves as a protective component, allowing current to flow in one direction while preventing any potential backflow that could disrupt the operation of the analog circuit 106. Details of the analog circuit are further described in conjunction with FIG. 6. The diode 330 allows the analog circuit 106 to utilize the terminal 110 as an input terminal. Additionally, the diode 330 is coupled to the terminal 110, facilitating the transmission of the analog output signal 206 to the connected external component.

In one embodiment, the controller 104 is configured to provide the mode selection signal to the mode selector 108, for example, via a terminal 308. Based on the mode selection signal, the mode selector 108 is configured to select a mode of operation for the analog circuit 106. The mode may be selected from the first mode, i.e., the current mode, or the second mode, i.e., the voltage mode. In particular, the analog circuit 106 may include a feedback circuit coupled to the mode selector 108. The feedback circuit includes the first feedback path associated with the first mode, and the second feedback path associated with the second mode. Subsequently, the selection of the mode by the mode selector 108 may be brought to effect based on a selection of the first feedback path or the second feedback path based on the mode selection signal. In other words, the mode selector 108 is configurable to select the first feedback path or the second feedback path based on the mode selection signal.

In an example, the mode selector 108 may correspond to a multiplexer, configurable to toggle between the first feedback path or the second feedback path.

The first feedback path causes a connection between the node B and the second negative terminal of the second amplifier circuit 314. It may be noted that the node B lies at a junction or connection between the fourth terminal (or the source terminal) of the second transistor circuit 316 and the current feedback resistor 318. To this end, the first feedback path is coupled to the current feedback resistor 318, such that a first voltage difference across the current feedback resistor is substantially equal to the value of the input voltage signal 202.

Further, the second feedback path causes a connection between the node G and the second negative terminal of the second amplifier circuit 314. It may be noted that the node G lies at the first junction between a second pair of resistors 332 of the plurality of resistors 116. Subsequently, the second feedback path is coupled to the first junction between the second pair of resistors 332. To this end, a third voltage at the first junction is substantially equal to the value of the input voltage signal 202. In an example, the second pair of resistors 332 comprises a resistor, R₅, 336, and a resistor, R₆, 338. The resistor 336 and the resistor 338 of the second pair of resistors 332 are connected in series to define the first junction between them. To this end, the feedback circuit ensures that a voltage level associated with the first feedback path, or the second feedback path is matched with the input voltage level Vᵢₙ after filtering, based on the mode selection signal.

In an example, the second pair of resistors 332 may implement a voltage divider circuit or configuration at the second terminal of the first transistor circuit 328. The second pair of resistors 332 is coupled to the terminal 110, such as at node F. By utilizing the voltage divider circuit, an input voltage to the second pair of resistors 332 may be scaled down to a desired level. This is particularly useful for interfacing with other external components that require specific voltage levels for optimal performance. For example, an input voltage to the second pair of resistors 332 may correspond to the analog output signal 206. Subsequently, the second pair of resistors 332 may scale down the analog output signal 206, such that a desired level of voltage is achieved and outputted at the first junction. In an example, the controller 104 is coupled to the first junction, such as at the node G via a terminal 334. Further, the analog circuit 106 is configured to supply a first voltage output signal to the controller 104 via the first junction. For example, the first voltage output signal is provided to the controller 104 as an output voltage. For example, the output voltage is a scaled-down value of the analog output signal 206 that is provided to the controller 104.

Pursuant to embodiments of the present disclosure, the resistor, R₅, 336 is connected between the node F and the node G, i.e., between the terminal 110 which is the universal I/O terminal to which the external component may be coupled, and the terminal 334 at which the controller 104 may be coupled. Moreover, the resistor, R₆, 338 is grounded. It may be noted that the mode selector 108 is coupled to the node G, i.e., the terminal 334 to enable the selection of the second feedback path. In an embodiment, the resistor, R₅, 336 is omitted and short-circuited. In this case, the first voltage signal provided to the controller 104 is equal to the voltage of the output signal.

In an example, the analog circuit 106 is coupled to the external component, such as via the terminal 110. In an embodiment, the MP-Bus is connected to the analog circuit 106. When the voltage level at the terminal 110 is high, i.e., greater than a predefined value, then an absolute voltage level is detected.

In an example, the controller 104 is configured to detect a change in the voltage level at the output to detect the presence of the MP-bus. In certain cases, there may not be a need to detect a change in the voltage to detect the presence of the MP-bus.

In an embodiment, in the current mode, the controller 104 is configured to detect a resistance of the external component directly, based on the output current which is a function of the input voltage signal 202, and a voltage level at the terminal 110. In an example, the resistance of the external component can be determined based on a digital signal generated by an ADC (not shown) connected to the terminal 334.

In certain cases, a short circuit may be detected in the current mode by detecting the output voltage and comparing the detected output voltage to a threshold, such as 0.2V. In an example, an open circuit may also be detected based on the output voltage, for example, if the output voltage is greater than another threshold, for example, 11V.

Further, in the voltage mode, the short circuit can be detected if the output voltage does not reach an expected output voltage, as the output current is limited as described further below to, e.g., 23 mA. Moreover, in the voltage mode, the presence of a bus can be detected using an absolute value.

Based on the assessment of the load condition output voltage, the controller 104 may be configured to, for example, control certain operations of the HVAC field device 102 or the HVAC system. The controller is configured to determine status data associated with an external component, such as a load, a digital bus, a sensor, an actuator, or any other components of the HVAC field device 102. Further, the status data may exemplarily correspond to, but is not limited to, fault data, connection data, or resistance data.

The fault data may indicate an occurrence of a fault in the external component/ or a fault in a connection to the external component, such as when the terminal 110 is short-circuited in the voltage mode or when a load resistor of the external component is determined to be below a threshold. In an example, the short circuit can be detected when the output voltage does not reach the predefined threshold as the output current will saturate if the threshold is not reached. Further, if the load condition output voltage does not correspond to an expected value or within an expected range, a fault is identified and reported. In such a case, the terminal 110 may be disabled to provide the analog output signal 206 to the external component. In an example, the terminal 110 is disabled by switching a mode of the analog circuit 106 to current mode and setting the input voltage signal 202 or the PWM signal to 0 Volt.

The connection data may indicate an active connection with the external component, enabling identification of the presence of the external component connected to the terminal 110 and/or identification of a type of the external component. Further, the resistance data may indicate a resistance value of the external component, such as a resistance-dependent sensor.

In an embodiment, the controller 104 includes an analog-to-digital converter (ADC). In an example, the controller 104 measures the output voltage using the ADC. The controller 104 is configured to generate a digital signal based on the first voltage output signal at the first junction or the second voltage output signal at the second junction when the external component is connected to the terminal 110. The status data may be determined based on the digital signal.

In an embodiment, the controller 104 is configured to generate the mode selection signal based on the status data, sensor status data, or a user input. When the controller 104 analyses the status data, the controller 104 can determine the most appropriate mode to enhance the operation of the HVAC field device 102. For instance, if status data indicates fault data associated with a fault or a malfunction, the controller 104 may generate the mode selection signal to correspond to the current mode for a safe operation of the analog circuit 106 and to prevent further issues.

To this end, the analog circuit is dynamically configurable to operate in an input mode to receive an input signal from an external source at the terminal 110, or an output mode to supply the analog output signal 206 to an external component via the terminal 110. In an example, the analog circuit 106 has a dynamic configuration capability that allows it to operate in two distinct modes, i.e., the input mode and the output mode. This versatility is essential for applications that require flexible signal processing and control. In the input mode, the analog circuit 106 is configured to receive the input signal from the external source at the terminal 110. This mode is useful for applications where the field device needs to monitor or analyse signals from an external source, such as a sensor. When operating in the input mode, the analog circuit may condition or convert incoming signals into a format suitable for further analysis or digital conversion. The signals can be used for monitoring environmental conditions, detecting anomalies, or facilitating user interactions.

Conversely, in the output mode, the analog circuit 106 is configured to supply an analog output signal 206 to the external component via the terminal 110. The output mode is employed in applications where the analog circuit 106 is required to drive the external components, such as actuators, motors, valves, pumps, or other devices that necessitate a specific analog signal for their operation. This mode ensures that the appropriate signals are generated for these external devices for their operation. By supplying the analog output signal 206, the analog circuit 106 provides signals that influence the behavior of connected external devices, enabling functionalities such as setting position setpoints for valve or damper actuators, speed setpoints for pumps, flow rate or differential pressure setpoints for flow or pressure regulating systems like Variable Air Volume (VAV) Control Units and Electronic Pressure Independent Valves (EPIV), or a temperature setpoint for a heating or cooling system. Additionally, the analog circuit may provide signals representing measurement values, such as ambient air temperature or CO₂ concentration levels, as well as feedback values of control loops.

In an embodiment, the analog circuit 106 is configurable to be coupled to a passive sensor to supply a predefined current via the terminal 110. The controller 104 is further configured to generate, using the ADC, a sensor signal based on the output voltage. The controller 104 utilizes the ADC to generate a sensor signal based on the output voltage from the sensor. It transforms the analog voltage levels produced by the sensor into a digital format that the controller can interpret and analyse. The resulting sensor signal provides a quantitative representation of the sensor's output, which is influenced by various environmental factors, such as temperature or pressure.

In operation, the current multiplier configuration 304 is configured to multiply the intermediate current 204 with a predefined ratio to generate the analog output signal 206. In an embodiment, the first amplifier circuit 326 operates as a voltage follower, outputting a voltage at the first terminal at node E that tracks the voltage at node C, which corresponds to the voltage at the positive terminal. As a result, the analog circuit 106, which includes the first amplifier circuit 326 and the first transistor circuit 328, adjusts the second voltage across the second path to be substantially equal to the first voltage across the first path. The reference voltage supply 306 is coupled to the first resistor 322 and the second resistor 324 via the first terminal 320. The first positive terminal of first amplifier circuit 326 is coupled to the third terminal of the second transistor circuit 316 and the first resistor 322 at node C. Further, the first negative terminal is coupled to the first terminal of the first transistor circuit 328 and the second resistor 324 at node E. The connection between the first negative terminal and the node E may form a feedback path between the first negative terminal and the first terminal. The feedback path is configured to adjust a second voltage across the second path substantially equal to a first voltage across the first path. To this end, this configuration of the current multiplier configuration 304 enables to maintain the second voltage at the node E equal to the first voltage at the node C. This arrangement results in a parallel connection between the first resistor 322 and the second resistor 324 due to the first amplifier circuit 326.

In an example, if the voltage difference across the first resistor 322 is equal to the voltage difference across the second resistor 324 and if the intermediate current 204 is I₁ then the current I₂ through the second resistor 324 can be calculated using Ohm's law. In an example, the first voltage at the node C is determined as: $V = {I}_{1} {R}_{1}$ (1) and if the first and the second voltage are equal it follows that: ${I}_{1} {R}_{1} = {I}_{2} {R}_{2}$ (2) From this relationship, we can derive that: ${I}_{2} = {I}_{1} \frac{{R}_{1}}{{R}_{2}}$ (3)

Equation 3 illustrates that the current I₂, which corresponds to the analog output signal 206, may be calculated based on a ratio of resistance values associated with the first resistor 322 and the second resistor 324. The multiplier configuration effectively scales the intermediate current 204 according to the resistance ratio, thereby generating the analog output signal 206 reflective of the desired operational parameters.

In an example, the controller 104 is further configured to determine sensor status data associated with the sensor based on the sensor signal. The sensor status data indicates sensor resistance data. Once the sensor signal is generated, the controller determines the sensor status data associated with the sensor. This status data includes information about the sensor's resistance, which can indicate its operational state. By analysing the resistance data, the controller 104 may assess whether the sensor is functioning correctly or if any issues need to be addressed. Moreover, the controller 104 may determine readings of the sensor based on the sensor data. In certain cases, based on the reading, the controller 104 may be configured to control an operation of certain external components of the HVAC field device 102.

In an example, the controller 104 is configured to determine temperature data associated with the sensor based on the sensor status data. The controller 104 uses the sensor status data to derive temperature data that may be measured by the sensor. In such a case, the sensor may be an RTD. By analysing the resistance data in conjunction with the known temperature characteristics of the sensor element, the controller 104 can accurately determine a range of temperatures. This includes not only the ambient temperature of the environment but also the temperatures of various fluids, such as water or air.

FIG. 4 is a diagram that illustrates an exemplary schematic diagram 400 of the analog circuit 106, in accordance with an embodiment of the present disclosure. The analog circuit 106 may include a Zener diode, D₂, 402, and a switchable pull-down load 406.

The Zener diode 402 is coupled between the output terminal of the second amplifier circuit 314 and the ground potential. The Zener diode 402 serves as a protection component in the analog circuit 106. The Zener diode 402 is used to prevent excessive current flow by limiting a voltage applied to the gate terminal of the MOSFET. In an example, in normal operation, an output from the second amplifier circuit 314 controls a voltage at the second control terminal of the second transistor circuit 316. This may cause the flow of the intermediate current 204 from the third terminal (or the drain terminal) to the fourth terminal (or the source terminal) of the second transistor circuit 316. However, during a transient voltage spike, the voltage at the second control terminal of the second transistor circuit 316 may exceed a safe threshold, risking damage to the second transistor circuit 316 and other circuit components of the analog circuit 106. The Zener diode 402 addresses this issue by clamping the voltage at the second control terminal when it exceeds a breakdown voltage of the Zener diode 402. The breakdown voltage may be set to a value that ensures safety in the operation of the second transistor circuit 316. By limiting the voltage at the second control terminal, the Zener diode 402 effectively caps the maximum current that the second transistor circuit 316 can sink, ensuring safe and reliable circuit operation under varying load conditions.

In an embodiment, the Zener diode 402 protects the MOSFET and also defines the maximum output current I_{out_max}: The Zener diode 402 is chosen such that the Gate to Source voltage (V_{GS}), which is given by the voltage at the gate minus the voltage drop across the current feedback resistor 318 (I₁ * R₃), will be below or close to the threshold voltage (Vₜₕ) of the MOSFET when I₂ exceeds a predetermined current limit I_{out_max}. Typically, this means that the breakdown voltage of the Zener diode is close to I_{out_max} * R₃ * R₂ / R₁ + Vₜₕ. Thus, for instance, in the voltage mode, current limiting can be implemented to restrict the analog output signal 206 to less than 25 mA in an event of a short circuit, utilizing one or more resistors from the plurality of resistors 116.

In an embodiment, the mode selector 108 may correspond to a 2:1 multiplexer. The mode selector 108 is configured to select the first mode or the second mode based on the mode selection signal. In an example, the mode selection signal may be generated by the controller 104. The mode selection signal is provided at the terminal 308 of the analog circuit 106. Further, the mode selector 108 is provided with the mode selection signal to configure a first feedback path 404A or a second feedback path 404B. In an example, the mode selection signal may act as a select signal for the 2:1 multiplexer. Based on the select signal, the mode selector 108 is configured to select the first feedback path 404A or the second feedback path 404B.

In an embodiment, the mode selection signal is associated with the first mode, which is defined as the current mode. In such a case, the analog circuit 106 is configured to output the analog output signal 206 as a current signal that varies in a range of, for example, 0 mA to 20 mA based on the input voltage signal 202 at the input terminal 208. The controller 104 is configured to generate the mode selection signal as 0V which is to be provided to the mode selector 108 via the select line. Upon receiving this mode selection signal as LOW, the mode selector 108 is configured to select the first feedback path 404A. The first feedback path 404A is coupled to the fourth terminal of the second transistor circuit 316 and the current feedback resistor 318 at the node B. After switching to the first feedback path 404A, the second amplifier circuit 314 is configured to force a voltage level at the node B to be equal to a voltage level at the second positive terminal (i.e., the non-inverting terminal) of the second amplifier circuit 314. The second positive terminal of the second amplifier circuit 314 is coupled to the output terminal of the low pass filter 302 at the node A. For instance, the output voltage of the low pass filter 302 is Vᵢₙ, then the second amplifier circuit 314 is configured to maintain a voltage level at the node B to be equal to the Vᵢₙ. Further, a voltage difference across the current feedback resistor 318 results in the flow of the intermediate current 204. The intermediate current 204 is calculated using Ohm's law as: $V = IR$
where V= voltage difference across the current feedback resistor 318,
I = current flowing through the current feedback resistor 318,
R = the resistance value associated with the current feedback resistor 318.

By using Ohm's law, the intermediate current 204 flowing across the current feedback resistor 318 can be calculated. In an embodiment, the intermediate current 204 flowing through the current feedback resistor 318 flows from the third terminal of the second transistor circuit 316 to the fourth terminal of the second transistor circuit 316 because a current at the second control terminal of the second transistor circuit 316 is zero. For example, if a resistance value associated with current feedback resistor 318 is set at 2 kΩ and an input signal at the second positive terminal (Vᵢₙ) of 3V is applied, then the current passing through current feedback resistor 318 can be calculated as 1.5 mA. The calculation indicates that under these conditions, the intermediate current 204 of approximately 1.5mA flows through the current feedback resistor 318.

In an embodiment, the first amplifier circuit 326 is configured to maintain a voltage level at the node E equal to a voltage level at the node C. Therefore, a voltage across the second resistor 324 is equal to a voltage across the first resistor 322. In an example, the resistance value associated with the first resistor 322 is 1k ohm and the resistance value associated with the second resistor 324 is 75 ohm. If for instance, the intermediate current 204 is equal to 1.5 mA, then the voltage across the first resistor 322 and the voltage across the second resistor 324 is equal to 1.5V. So, the current multiplier configuration 304 is configured to produce the current output signal equal to: ${I}_{2} = {I}_{1} \frac{{R}_{1}}{{R}_{2}}$ Here, *I*₁ represents the intermediate current 204 flowing through the first resistor 322, while the current output signal *I*₂ denotes the analog output signal 206 in the current mode. The predefined ratio of the resistance value of the resistor R₁ with the resistance of the resistor R₂ determines how much the intermediate current 204 is scaled to generate the output current I₂.

The intermediate current *I*₁ of 1.5mA in the example results in a current *I*₂ of 20 mA flowing through the second resistor 324. Given that the current at the first control terminal of the first transistor circuit 328 is zero, the entire current of 20 mA flows through the diode 330 and into the external component coupled to the terminal 110. This configuration ensures that the output current *I*₂ is effectively delivered to an external component. The ability of the first amplifier circuit 326 to maintain equal voltage levels across the first resistor 322 and the second resistor 324 is crucial for achieving accurate current control within the analog circuit 106.

Additionally, it is important to note that a negligible current will flow through the second pair of resistors 332. In an example, the second pair of resistors 332 may work as a voltage divider circuit. The second pair of resistors 332 may include the resistor 336 and the resistor 338, which is utilized for measuring the output voltage. In an example, a maximum input resistance value of the external component coupled to the terminal 110 in the current mode is specified as 500 Ohms. This configuration allows the HVAC field device 102 to operate efficiently under varying load conditions. Conversely, a minimum input resistance value of the external component can be 0 Ohms, effectively representing a short circuit. The design accommodates a maximum output current I₂ of 22 mA, which is achievable when the input voltage signal 202 is set at 3.3V, serving as the reference voltage for the HVAC field device 102.

For instance, when considering a resistance value associated with the external component as 10 Ohms, this configuration yields a voltage drop of 200 millivolts at an output current I₂ of 20 mA. Specifically, during current mode there may be a low resistance. This characteristic can be utilized for implementing cable short-circuit detection. By monitoring the voltage drop across the resistance value of the external component, in mA, the controller 104 of the HVAC field device 102 can identify conditions indicative of a short circuit, thereby enhancing safety and reliability. The controller 104 may identify conditions indicative of a short circuit if the output voltage level is below a predefined minimal voltage level, such as 200mV, for a predetermined test current, e.g. 20mA. By ensuring that the HVAC field device 102 can handle both maximum and minimum load conditions while providing accurate current outputs, the design enhances overall performance and adaptability.

In an embodiment, the advantage of the analog circuit 106 lies in the use of local feedback in the current mode, utilizing the voltage across the resistor R₃ 318 to measure the intermediate current 204. This design ensures that output current is solely dependent on the resistor values of the first pair of resistors, i.e., the resistor, R₁, 322, and the resistor, R₂, 324, and the current feedback resistor, R₃, 318. Subsequently, the output current is independent of the reference voltage supply 306 and the output common mode voltage as long as the output voltage is in a compliance range.
In an embodiment, when the mode selection signal is associated with the first mode, the analog circuit 106 is configured to output the analog output signal 206 as a current output signal I_{OUT}. Further, the second stage 114 is configured to generate the analog output signal 206, such that the intermediate current 204 is multiplied by a predefined ratio to define the analog output signal 206. In an example, the predefined ratio is associated with a first pair of resistors of the plurality of resistors 116, wherein the first pair of resistors may include the first resistor 322, and the second resistor 324. In an example, a gain factor of the analog circuit between a value of the input voltage signal 202 and the value of the analog output signal 206 as the current output signal I_{OUT} is associated with a first set of resistors of the plurality of resistors (116). Further, the first set of resistors may include the first resistor 322, the second resistor 324, and the current feedback resistor 318. The gain may correspond to a ratio of the first resistor 322 with a product of the current feedback resistor 318 and the second resistor 324, i.e., $\frac{{R}_{1}}{{R}_{3} \times {R}_{2}}$.

Further, the controller 104 is configured to determine the voltage level of the analog output signal 206. If the voltage level of the analog output signal 206 is higher than the predefined threshold, the controller 104 is configured to generate an error message and disable the analog output signal 206 by setting the input voltage to 0V. In an example, the controller 104 may determine if an output voltage level of the voltage output signal is below a minimal voltage level, such as 0.2V for a predetermined test current, e.g. 20mA. When the output voltage level is less than the minimum voltage level, an occurrence of short-circuit is detected. In such a case, the controller 104 is configured to generate an error message and/or disable the analog output signal 206 by setting the input voltage to 0V.

In another embodiment, when the mode selection signal is associated with the second mode which corresponds to the voltage mode, the analog circuit 106 is configured to output the analog output signal 206 as a voltage output signal V_{OUT} that varies in a range of, for example, 0 to 10V based on the input voltage signal 202 at the input terminal 208. The controller 104 is configured to provide the mode selection signal as HIGH or 3.3V to the mode selector 108. Upon receiving this mode selection signal from the controller 104, the mode selector 108 is configured to select the second feedback path 404B.

In the second feedback path 404B, the mode selector 108 is coupled to the first junction defined by the second pair of resistors 332 at the node G. Further, the second amplifier circuit 314 is configured to maintain a voltage level at the node G equal to a voltage level at the second positive terminal of the second amplifier circuit 314. In an example, a voltage difference across the resistor 338 is equal to a voltage level at the second positive terminal i.e., Vᵢₙ. The current passing through the resistor 338 is equal to Vᵢₙ/R₆. The analog output signal 206 at the terminal 110 may be equal to the voltage difference *Vₒᵤₜ* across the resistor, R₅, 336, and the resistor, R₆, 338, which can be calculated by using Ohm's law. Since the current passing through the resistor 338 (R₆) must be flowing through the resistor 336 (R₅), the voltage difference (voltage output signal, V_{OUT}) may be calculated by ${V}_{out} = I ∗ \left({R}_{5}+{R}_{6}\right)$ substituting the value of I= Vᵢₙ/R₆ ${V}_{out} = \frac{{V}_{in}}{{R}_{6}} ∗ \left({R}_{5}+{R}_{6}\right)$
where Vᵢₙ = voltage at the second positive terminal of second amplifier circuit 314,
R₅= the resistance value associated with the resistor 336, and
R₆= the resistance value associated with the resistor 338.

The ratio of the sum of the resistance values of the resistors R₅ and R₆ to the resistance value of the resistor R₆, indicated as (R₅+R₆)/R₆ defines the gain factor in the voltage mode. The gain factor is associated with a second set of resistors of the plurality of resistors 116, which includes the resistor 336 and the resistor 338. In an example, if the resistance value associated with the resistor 336 and the resistor 338 is 30 kilo-ohms and 10 kilo-ohms, respectively, the gain factor corresponds to a ratio value between the filtered input voltage *Vᵢₙ* and the analog output signal 206, i.e., a voltage output signal V_{OUT}. The gain factor in the voltage mode may correspond to 4. In an example, the filtered input voltage *Vᵢₙ* of 3.3 Volts is provided. The analog circuit 106 generates the analog output signal 206 to be 13.2 volts.

In another embodiment, the analog circuit 106 is configured to detect whether the digital bus is connected to the terminal 110. For example, the controller 104 may be configured to ascertain the connection status of the digital bus by interpreting the digital signal received from the first voltage signal at the node G. The ADC within the controller 104 is designed to identify changes in voltage levels that rise above a predetermined threshold. For instance, the predetermined threshold is set as greater than a maximum analog output voltage or the output voltage at the maximum input voltage, e.g. 13.2V. Upon determining that the digital bus is connected to the analog circuit 106, the controller 104 is configured to generate a mode selection signal. The mode selection signal prompts a transition in the mode of the analog circuit 106 to the first mode or the current mode. In this scenario, the controller 104 generates the mode selection signal, further, the mode selector 108 is configured to select the first mode based on the mode selection signal, and further, the controller 104 is configured to set the input voltage signal 202 to 0V.

In an embodiment, the analog circuit 106 further includes a switchable pull-down load, R₇, 406, which is coupled to terminal 110 and a switch 408. The controller 104 is configured to activate the switchable pull-down load 406 based on the mode selection signal, specifically when the mode selection signal corresponds to the second mode (i.e. the voltage mode). In an example, the switch 408 is configured to connect the switchable pull-down load 406 to the ground when the mode selection signal corresponds to the second mode. If the controller 104 provides the mode selection signal as 3.3V, the switchable pull-down load 406 is grounded. In an example, the switchable pull-down load 406 is configurable to apply a pull-down bias which is used to maintain a defined voltage level at the terminal 110. Further, the switch 408 is connected to ground potential, ensuring that a voltage at the node F remains at a specified low state when no active signal is applied at the terminal 110. For example, the activation of the switchable pull-down load 406 is based on the selection of the second mode by the mode selector. The pull-down bias is applied to achieve a defined voltage at the terminal 110 in the voltage mode.

By establishing a ground connection, the switchable pull-down load 406 stabilizes the voltage level at a known reference point when the analog output signal 206 is not actively driven by the analog circuit 106. This prevents the occurrence of undefined states, which can cause malfunctions in the HVAC field device 102.

In an example, the switchable pull-down load 406 may be implemented by a resistor or one or more transistors selected based on a desired current drawn and the characteristics of the analog circuit 106. The resistance value associated with the switchable pull-down load 406 may be low enough to provide an effective path to ground, at the same time the resistance value must be high enough to limit power consumption during active states.

The switchable pull-down load 406 is configured to connect to a reference ground potential, thereby effectively pulling down the voltage at the node F to a predetermined low state.

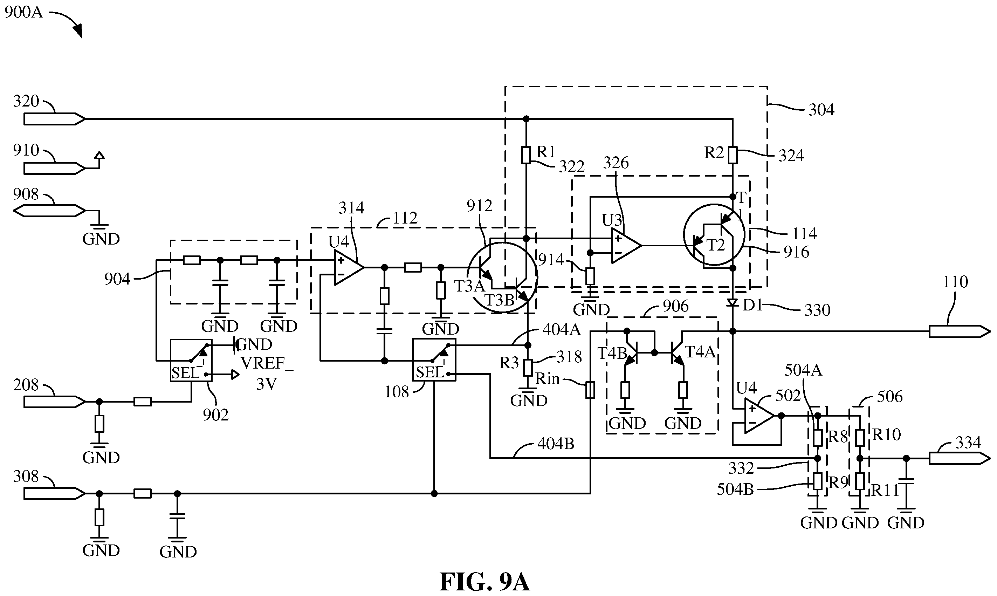

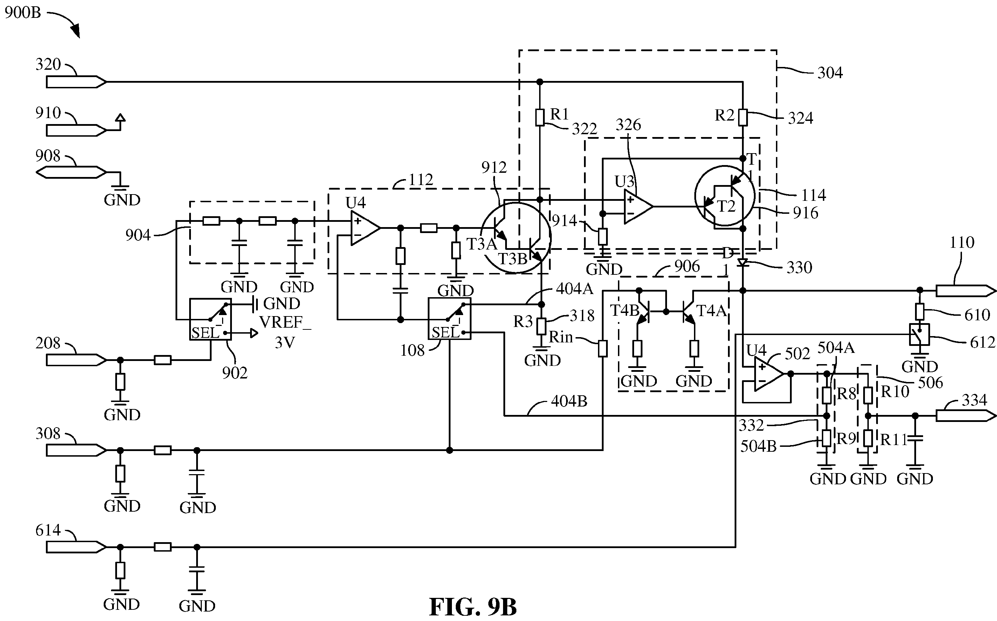

In an alternative embodiment, the switchable pull-down load 406 is implemented based on a current mirror configuration. When activated, the current mirror configuration generates a load-sinking bias current that remains substantially constant across a wide range of output voltages, unlike the current through a resistor pulldown configuration. The current mirror pull-down configuration is described more in detail in conjunction with FIG. 9A and FIG. 9B.

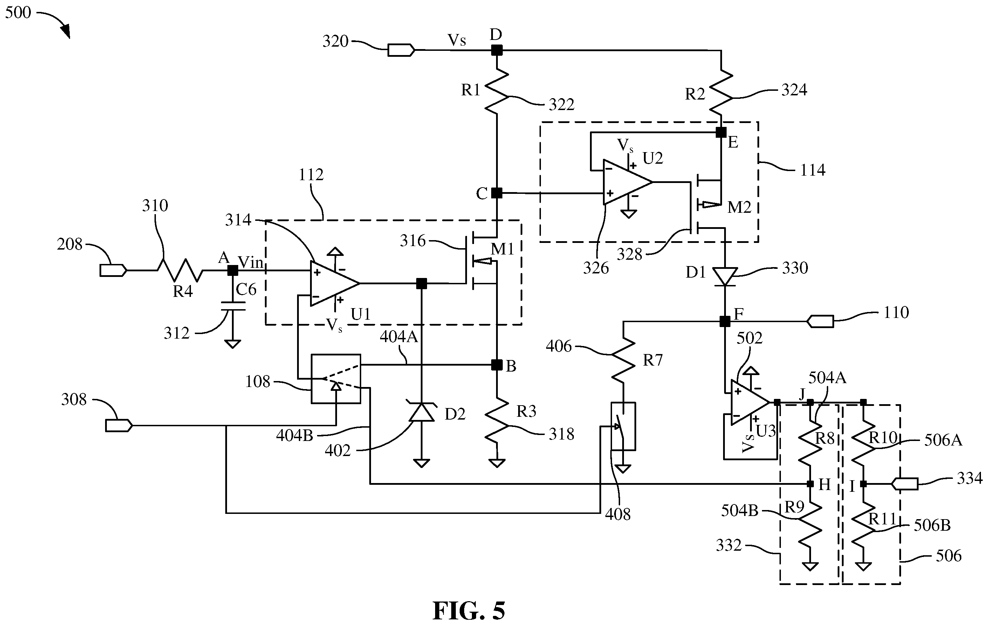

FIG. 5 is a diagram that illustrates an exemplary schematic diagram 500 of the analog circuit 106, in accordance with an embodiment of the present disclosure. The analog circuit 106 may include a voltage buffer, U₃, 502 to provide impedance transformation. In addition, the analog circuit 106 may include a third pair of resistors 506. The third pair of resistors 506 are connected in series to define a second junction therebetween.

In an embodiment, a voltage buffer 502 is positioned between the terminal 110 and the second pair of resistors 332 or the third pair of resistors 506. The primary purpose of the voltage buffer is to provide high input impedance, which offers several advantages. In current output mode, the output current (I₂) is fully transmitted to the external component, while the current through the voltage divider remains negligible, ensuring that the output current accurately follows the input signal due to the high input impedance of the voltage buffer. In voltage input mode, the high input impedance minimizes the loading effect on the source, preventing it from delivering more current than it ideally should. Additionally, in current input mode, the input impedance is determined solely by the shunt resistor used to convert the input current to a voltage (e.g., 500 Ohms), rather than being influenced by the resistance of the voltage divider.

In an embodiment, the voltage buffer 502 may be a voltage buffer amplifier including an op-amp. The voltage buffer amplifier uses a stage having unity voltage gain, with no phase or polarity inversion, and acting as an ideal circuit with very high input impedance and low output impedance.

The output voltage of the voltage buffer 502 may be equal to the input signal of the voltage buffer 502 (e.g. the analog output signal 206). The voltage buffer 502 may be designed as a unity-gain voltage buffer when an output voltage of the voltage buffer 502 may be equal to the input signal of the voltage buffer 502 (e.g. the analog output signal 206). The design of the voltage buffer 502 may include an op-amp as a central element. The op-amp may function as a high-gain differential amplifier, featuring two inputs, an inverting input, and a non-inverting input and an output. The non-inverting input terminal may be coupled to the output of the diode 330, and the inverting input terminal may receive as input the output signal of the voltage buffer 502. The output of the voltage buffer 502 is connected at the node J and may be adjusted to a voltage level that eliminates any voltage differential between the inverting input terminal and the non-inverting input terminal of the voltage buffer 502 due to a high open loop gain characteristic of the op-amp.

The output signal of the voltage buffer 502 may be coupled with the voltage divider circuits implemented using the plurality of resistors 116, providing the required signals for further processing. The output of the voltage divider circuit may be connected to the voltage feedback path or the controller 104, such as via the ADC.

In an embodiment, the analog circuit 106 may include the third pair of resistors 506 from the plurality of resistors 116. The third pair of resistors 506 includes a resistor, R₁₀, 506A, and a resistor, R₁₁, 506B. The third pair of resistors 506 are connected in series, defining a second junction between them. Moreover, the third pair of resistors 506 is parallel to the second pair of resistors 332. Further, the analog circuit 106 is configured to generate the second voltage output signal using the third pair of resistors 506 and based on the analog output signal 206. The second voltage output signal is generated at the second junction. The analog circuit 106 is further configured to supply the second voltage output signal to the controller 104 as an output voltage. Details associated with the analysis of the output voltage corresponding to the second voltage output signal are described in detail in conjunction with, for example, FIG. 3.

In an embodiment, the second pair of resistors 332 includes a resistor, R₈, 504A, and a resistor, R₉, 504B. In an embodiment, the resistor 504A is similar to the resistor 336 and the resistor 504B is similar to the resistor 338. In an embodiment, the resistor 504A is coupled with the output of the voltage buffer 502 at the node J. Further, the resistor 504A is coupled to the resistor 504B in series, such that the resistor 504A and the resistor 504B define the first junction therebetween at the node H. In an embodiment, the mode selector 108 is coupled to the second pair of resistors 332 at the first junction. For instance, the connection between the node H and the mode selector 108 defines the second feedback path 404B. Further, the analog circuit 106 is configured to generate the first voltage output signal at the first junction using the second pair of resistors 332 based on the analog output signal 206. Further, the analog circuit 106 is configured to supply the first voltage output signal to the second feedback path based on the selection of the second feedback path 404B by the mode selector 108. In an embodiment, if the controller 104 is configured to generate the mode selection signal associated with the second mode, then the analog circuit 106 is configured to adjust a voltage level associated with the second feedback path 404B to match the value of the input voltage signal 202.

The second voltage divider allows for the selection of different voltage ratios for the two voltage output signals, which can be tailored to adapt the second voltage to the ADC signal range. For example, the first output may have a scaling factor of 1:4, while the second output has a scaling factor of 1:5. This flexibility in voltage scaling contributes to improved signal accuracy and overall system performance.

FIG. 6 is a diagram that illustrates an exemplary schematic diagram 600 of the analog circuit 106, in accordance with an embodiment of the present disclosure. FIG. 6 is described in conjunction with elements of FIG. 1, FIG. 2A, FIG. 2B, FIG. 3, FIG. 4, and FIG. 5.

In an embodiment, the analog circuit 106 is configurable not to only operate in an output mode to supply the analog output signal to the external component coupled via the terminal 110 but also to operate in an input mode to receive an input signal from an external source at the terminal 110. In the input mode, the analog circuit 106 is further configurable to operate in a current input mode and a voltage input mode.

The diode 330 allows the analog circuit 106 to utilize the terminal 110 as an input terminal. The analog circuit 106 further comprises a voltage conversion resistor 610 and an input selection switch 612 corresponding to the input mode selector 210 as described in reference to Fig. 2B. In an embodiment, in the current input mode, the input selection switch 612 is configured to establish a current path between the terminal 110 and GND via the voltage conversion resistor 610. For instance, the input selection switch 612 may be closed when a control signal such as a HIGH is applied (e.g. a 3.3 V signal) at terminal 614. In this case, the current input mode is enabled and the input current (e.g., 20mA) applied at terminal 110 flows through the voltage conversion resistor 610 having a resistance value of 500Ω, resulting in a voltage (e.g. of 10V) at node F, which can also be accessed at node G via the ADC. Conversely, when the input voltage mode is selected (e.g. a 0V signal) the input selection switch 612 is closed. The voltage (e.g. 10V) at node F can be accessed at node G via the ADC.

It is important to note that when the input mode is activated, the voltage input signal must be set to 0V, and the current mode must be selected for two reasons: first, to prevent the analog circuit 106 from compensating the voltage caused by the input signal at terminal 110, which we intend to measure; and second, to deactivate the pull-down load (Although not shown in FIG. 6) thereby increasing the input impedance for the signal being inputted at terminal 110.

In a particular embodiment, the voltage conversion resistor 610 is a precision resistor, preferably a 500 Ω resistor.

In a particular embodiment, the controller 104 is configured to use the voltage conversion resistor 610 for calibration of the output current respectively determination of the gain factor for the current mode. In this embodiment the controller 104 is configured to temporarily apply the input current enable signal at the input selection switch 612 at terminal 614 (e.g. a 3.3 V signal) in current output mode for a given output current setpoint respective voltage input signal, and therewith establishing a parallel connection of the voltage conversion resistor 610 and the load resistance. i.e. the resistance of resistance temperature sensors. The parallel connection yields a drop in the voltage at the terminal 110, respectively of the voltage at node F, which can be accessed at node G via the ADC. The voltage drop can be used to calibrate the voltage input signal in the current mode respectively to determine the gain factor, so that in the current mode the delivered output current corresponds to the expected value. In a particular embodiment, the calibration is repeatedly executed. This is particularly useful when the controller 104 is configured to determine a temperature using a resistance temperature sensor. In a further embodiment, when the parallel connection is activated, at least a second current setpoint is applied, different from the first setpoint, for calibration of the output current and determination of the gain factor.

In an embodiment, the HVAC field device 102 may include several advanced features to ensure reliable operation and safety in various conditions. The analog circuit 106 is designed to be compatible with a digital bus through a high-impedance output, which minimizes current draw and ensures accurate signal transmission. The use of a precision voltage reference, e.g. the first reference voltage at the first node of the switching circuit with an initial accuracy of 0.1% may contribute to stability and precision in measurements. In an embodiment, 0.1% or 25 ppm resistors are utilized for critical components to ensure minimal drift and high accuracy.

Further, the output circuitry is robust enough to withstand ±40 volts indefinitely. This resilience is achieved through a selection of, for example, the diodes 330 so that the diode 330 handle up to 40V when positive voltage is applied at the output, while the output transistor, such as the first transistor circuit 328 may withstand voltages greater than 40V under negative conditions. In certain cases, additional protection may be provided by a 40V ESD diode.

In one embodiment, in the voltage mode, the load resistor of the external component can be omitted entirely (open circuit), while in the current mode, the output can be short-circuited indefinitely without compromising system integrity. This flexibility allows for safe operation across various scenarios while ensuring that critical safety measures are in place to protect both the analog circuit 106, the HVAC field device 102, and the external component connected to the HVAC field device 102.

In one embodiment, an additional digital output is provided. In a particular embodiment, a current sinking output is provided. The current sinking output includes a switch, a terminal 606 for connecting a power supply, and another terminal 604 for outputting a digital signal. The terminal 602 is coupled to a switch 608. Furthermore, the switch 608 is coupled to the terminal 606 for connecting the power supply. For example, the power supply may be a 24V DC or 24VAC power supply. However also other power supplies may be connected.

In an example, the analog circuit 106 may incorporate one or more current sinking outputs to allow for selectively activating or deactivating the external component or providing a digital signal to the external component.

FIG. 7 is a diagram that illustrates a perspective view 700 of an add-on module associated with the HVAC field device 102, in accordance with an embodiment of the disclosure. FIG. 7 is described in conjunction with elements of FIG. 1, FIG. 2A, FIG. 2B, FIG. 3, FIG. 4, FIG. 5, and FIG. 6.

The HVAC field device 102 includes a plurality of stacked modules. The plurality of stacked modules includes a base module 702 and an add-on module 710. The base module 702 includes a housing 704, an electric motor and/or a sensor, a connection interface 708, and an electronic circuit connected to the electric motor and/or the sensor. The HVAC field device further comprises one or more external electrical interface(s) 706, 722. The one or more external electrical interfaces 706, 722 may be included in the base module 702 and/or the add-on module. The electric motor is arranged within the housing 704 of the base module 702 to drive an actuated part. In an example, if the electronic circuit is connected to the electric motor, the electronic circuit is configured to generate control signals for controlling the electric motor in order to implement one or more HVAC control functions.

According to embodiments of the present disclosure, the sensor is located within the housing 704 of the base module 702. Moreover, the sensor is coupled to the electronic circuit. The sensor of the base module 702 is configured to measure a parameter of the HVAC system, in particular, an environmental parameter of an environment in which an HVAC system or the HVAC field device 102 is implemented, such as a temperature and/or a humidity of an indoor environment of a building controlled by the HVAC system, and/or a particulate matter (PM), and/or carbon dioxide (C0₂) level of an environment controlled by the HVAC system. Alternatively, or additionally, the sensor of the base module 702 is provided to measure operational parameters of various components of the HVAC system such as an actuated position of the actuated part and/or the operational state of the HVAC field device 102 and/or other parameters of the HVAC system, such as a flow rate or differential pressure at locations of a liquid through a fluid transportation system.

In order to address the need to provide a wide range of HVAC devices in a large number of different configurations without having to manufacture a specific type of HVAC field device for each possible combination of functions and/or parameters, an HVAC field device is assembled to form the HVAC field device by attaching the add-on module 710 to the connection interface 708 of the base module 702. The add-on module 710 may provide an extension to functions of the base module 702. However, to provide a function that is not supported by either the base module 702 or by the installed add-on module 710, an additional second connection interface may be added to the base module 702 to accommodate a second add-on module to enable additional functions.

The add-on module 710 includes a housing 714, at least one circuit board 716, a connection interface 718 of the first type, a connection interface 712 of a second type, and optionally one or more external electrical interface(s) 722. As a counterpart of the connection interface 708 of the first type of the base module 702, the connection interface 712 of the second type of the add-on module 710 is arranged on a bottom side of the housing 714. The connection interface 708 of the first type of the base module 702 and the connection interface 712 of the second type of the add-on module 710 are configured to mechanically and electrically connect with each other.

The connection interface 718 of the first type of the add-on module 710 is arranged on the first top side of the housing 714. Arranging the complementary connection interface 718 of the first type and the connection interface 712 of the second type on parallel and opposite sides of the housing 714 of the add-on module 710 enables a plurality of add-on modules to be stacked while maintaining a constant footprint/cross-section of the resulting HVAC field device 102.

The one or more add-on modules may implement one or more functional extension devices. The at least one circuit board 716 of the add-on module may include the analog circuit 106 and the controller 104 for providing a software-configurable analog output terminal, enabling the selection of current output mode or voltage output mode in the HVAC field device. In a further preferred embodiment, the at least one circuit board includes the software configurable analog circuit 106 for providing a software-configurable Input/Output terminal, enabling the selection of current output mode, voltage output mode, current input mode, voltage input mode, or resistance measurement input mode selectable by the controller 104, based on status data, sensor status data, or a user input. This allows for flexible interfacing with various HVAC system components.

The at least one circuit board 716 may include more than one analog circuit. It may include a further processing device, such as a microcontroller or application-specific integrated circuit (ASIC) for providing additional computing power to the HVAC field device 102. The controller 104 and/or the processing device may implement a controller device for advanced motor control or signal processing and/or for implementing HVAC control functions. The one or more add-on modules may also include a communication device, implemented by means of the circuit board, including a wired communication interface and/or a radio communication device for providing communication functionalities to the HVAC field device 102, as described above in conjunction with FIG. 1. The communication interface may be used for the mode selection of the analog circuit 106 by a user input via a computing device.

In a particular embodiment, the electronic circuit of the base module 702 includes the analog circuit 106. This is particularly advantageous if no add-on module is provided.

In an example, if the input mode is selected, the analog circuit 106 can be utilized within an actuator to receive various signals, such as analog position setpoints from an external controller (e.g., a Building Management System or a field device) or measurement values from a sensor. The electronic circuit, preferably in interaction with the processor of the circuit board 716, if present, is configured to generate control signals for controlling the electric motor based on the received various signals, to implement one or more HVAC control functions.

Additionally, the analog circuit 106 can connect to a passive sensor and receive digital signals. The received signals can be used by the electronic circuit and/or a processor of the circuit board to control the electrical motor. If the output mode is selected, the analog circuit 106 can also output signals to other field devices, such as feedback signals indicating the actuator's position or internal control variables.

In another example, if the field device includes a sensor, the analog circuit 106 is configured to output analog signals representative of the operational parameter(s) of the HVAC system, such as a temperature and/or humidity or signals representative of operational parameters of various components of the HVAC system. The signals of the sensor are typically digitally pre-processed by the electrical circuit of the base module 702 and/or the processor of the circuit board 716.

In an example, the external electrical interface 706 is provided at the base module 702 and the analog circuit 106 on the circuit board 716 of the add-on module 710. The external electrical interface 706 of the base module 702 is electrically connected via the connection interface between the base module 702 and the add-on module 710 to the analog circuit 106 on the circuit board 716 of the add-on module 710. This allows the analog circuit 106 to connect to the external component, such as a load, sensor, actuator, or another field device, via the external connection interface 706 of the base module 702. In another example, the external electrical interface 722 is provided at the add-on module 710. The external electrical interface 722 is electrically connected to the analog circuit 106 and allows the analog circuit 106 to connect via a corresponding connector 724 to the external component. The corresponding connector can include a direct connector such as a RAST connector allowing a direct solder-free connection with the terminal 110 of the analog circuit on the circuit board 716. In another example, the analog circuit 106 is provided at the base module 702, and the external electrical interface 706 at the base module 702 is electrically connected to the analog circuit 106 allowing the analog circuit 106 to connect to the external component. The modules of the HVAC field device 102 are configured to be powered through an external supply, e.g., by using one of the external connection interfaces 706 or 722.

In order to avoid a connection interface being left exposed after the modules have been stacked, a cover module is provided. The cover module may include a housing and a connection interface of the second type. In order to cover the connection interface of the first type of the outermost add-on module, the cover module is stacked on the outermost add-on module, thereby mechanically and preferably also electrically connecting the connection interface of the second type of the cover module to the connection interface of the first type of the outermost add-on module. The term 'outermost' is to be understood as the HVAC device block with an exposed connection interface, i.e. not covered by a corresponding connection interface of a further add-on module attached thereto.

Subsequently, the cover module may house or include a circuit board. The circuit may include the controller 104 and/or the analog circuit 106. The cover module further may include a human interaction device (HID). The circuit board may be electrically connected via the connection interfaces to the electronic circuits of one or more of the add-on modules and/or to the electric circuit 106 of the base module 702. In particular, the HID may be connected to the controller 104 which is further connected to the analog circuit 106. In an example, the HID is configured to display the status data. The status data may indicate the connection data indicating a connection status of the external component. In certain cases, the HID may display connectivity parameters of the HVAC field device 102. Providing the HID as part of the cover module is advantageous as after assembly of the HVAC field device 102, the cover module is the outermost block and therefore offers access to the HID. The HID is arranged to control and/or display operational parameters of the HVAC field device 102 (or one or more of its constituent HVAC device blocks) and/or one or more of the operational parameters of the HVAC system measured by the sensor.

FIG. 8 illustrates a schematic illustration of a cover module 800 of the analog circuit 106 of the HVAC field device 102, in accordance with an embodiment of the disclosure. FIG. 8 is described in conjunction with elements of FIG. 1, FIG. 2A, FIG. 2B, FIG. 3, FIG. 4, FIG. 5, FIG. 6, and FIG. 7.

In one embodiment, the HVAC field device 102 may include the cover module 800 designed to protect and support various internal components. The analog circuit 106 may be implemented on a printed circuit board (PCB), which may serve as the foundation for the circuit's functionality. The controller 104 may also be implemented on the PCB. The cover module 800 may provide insulation to the PCB of the analog circuit 106 from the external environment, ensuring reliable operation under diverse conditions. The cover module 800 is designed to house or rivet the PCB of analog circuit 106 in the correct position, preventing movement that could disrupt connections or functionality. Additionally, the cover module 800 may incorporate a configurable clip structure to attach seamlessly with the HVAC field device 102. This feature may enhance installation flexibility and allow for easy assembly and disassembly when maintenance or upgrades are required. The analog circuit 106 may be connected to other components, such as the external component, of the HVAC field device 102 through the one or more terminals, once the cover is attached or before being attached to the housing 704, 714 of the base module 702 or add-on module.

FIG. 9A and FIG. 9B is a diagram that illustrates an exemplary circuit diagram 900A and an exemplary circuit diagram 900B, respectively, of the analog circuit 106 of the HVAC field device 102, in accordance with an embodiment of the present disclosure. FIG. 9A is described in conjunction with elements of FIG. 1, FIG. 2A, FIG.2B, FIG. 3, FIG. 4, FIG. 5, FIG. 6, FIG. 7, and FIG. 8.

Referring to FIG. 9A and FIG. 9B, the analog circuit 106 includes a switching circuit 902 and the two-stage PWM low pass filter 904. The switching circuit 902 comprises a plurality of input nodes, an output node connected to the two-stage PWM low-pass filter 904, and a control input node coupled to the controller 104 via the input terminal 208 to receive the input voltage signal 202 as a control signal. A first input node of the plurality of input nodes is connected to a first reference voltage and a second input node of the plurality of input nodes is connected to a second reference voltage. The switching circuit 902 is configured to switch between the first reference voltage and the second reference voltage based on the control signal. In an example, the first reference voltage may correspond to a 3.3V reference voltage, and the second reference voltage is grounded. The switching circuit 902 is configured to switch between the first reference voltage and the second reference voltage based on the control signal.

In an example, if an amplitude of the input voltage signal 202 received from the controller 104 fluctuates, (i.e., the input voltage signal 202 on FIG.2), due to unstable power supply, or if the input voltage signal 202 is noisy, the switching circuit 902 may generate a precise PWM signal.

In an embodiment, the switching circuit 902 may correspond to a multiplexer. The control input node may correspond to a select line of the multiplexer. The control input node selects which input node of the plurality of input node is outputted at the output node. For example, the control input node is coupled to the controller 104. The controller 104 is configured to provide the control signal to the control input node of the switching circuit 902.

Further, the PWM low pass filter 904 may convert the PWM signal at the output of the switching circuit 902 in a smoothed voltage signal with a reduced ripple, e.g. below 1 millivolt. In an embodiment, both the first stage 112 and the second stage 114 of the analog circuit 106 may be implemented using bipolar Darlington transistors. For example, the first transistor circuit 916 of the second stage 114 may include or consist of a first Darlington transistor and the second transistor circuit 912 of the first stage 112 may include or consist of a second Darlington transistor. The use of bipolar Darlington transistors is advantageous as they provide high current gain, which is essential for effective signal amplification in the analog circuit 106. This configuration allows for improved performance while maintaining a compact design. Additionally, employing the bipolar Darlington transistors helps to reduce overall costs associated with the analog circuit 106. Furthermore, the inherent characteristics of bipolar Darlington transistors, such as their ability to handle higher currents and voltages, contribute to the robustness and reliability of the analog circuit 106. For example, in some cases, the transistor circuits 912 and 916 may be implemented using MOSFETs instead of the Darlington transistors.

Further, the first stage 112 and the second stage 114 of the analog circuit 106 are shared in both modes, i.e., the current mode and the voltage mode, to produce the desired analog output signal.

In an embodiment, the analog circuit 106 includes features for current limiting to improve safety and reliability. Essential components such as current sensing resistors, operational amplifiers, Zener diodes, and transistors collaborate to monitor and regulate current flow. Specifically, in the voltage mode, the current is limited to less than 25 mA to protect against potential short circuits. This ensures that the circuit remains operational without sustaining damage during fault conditions. In the current mode, the output voltage is limited in the event of an open circuit.

The analog circuit 106 includes a switchable pull-down load 906 which includes a current mirror configuration, comprising an input transistor and an output transistor. The base respectively the collector of the input transistor is coupled via an input resistor Rin to the terminal 308 which is also coupled to the mode selector 108. In this example the pull-down load is configured to be activated when the mode selection signal is provided as HIGH, for example as a 3.3V at the terminal 308, yielding to a reference current I_{ref} through the input resistor. The voltage at the base (or gate) of the input transistor is mirrored to the base (or gate) of the second transistor, ensuring that the output transistor conducts a similar current. This load-sinking bias current remains essentially constant across a wide range of output voltages, unlike a current through a resistor pull-down load configuration for example according to FIG. 5.

In an embodiment, a ground terminal 908 is incorporated to provide a stable ground connection for the analog circuit 106. The ground terminal 908 establishes a common return path for electrical currents, allowing for the proper functioning of various components within the analog circuit 106.

In an embodiment, a reference voltage signal (V_{ref}) 910 is generated using a Zener diode to provide stable voltage references. The use of the Zener diode allows for the creation of a precise reference voltage, which is crucial for maintaining the stability and accuracy of the analog circuit. In this case, a reference voltage with an accuracy of 0.1% is employed to enhance the overall stability of the analog circuit 106. In certain cases, the analog circuit 106 can be supplied by a single power supply, even an unregulated one, while still maintaining high precision, which is defined by the plurality of resistors 116.

In an example, the Zener diode generates the first reference voltage and/or the second reference voltage. In an example, the first reference voltage is 0V and the second reference voltage is 3V. The stability of the reference voltage signal is important in applications where precise voltage levels are required for signal processing, amplification, or other functions.

Further, an artificial offset is introduced by means of a resistor 914 connected between the first negative input of the first amplifier circuit 326 and the GND to achieve that a 0 Volt input consistently results in a 0 mA output current.

Referring to FIG. 9B, terminal 614 is connected to a low-pass filter which is further connected to the input selection switch 612. In an embodiment, the controller 104 may be configured to provide the control signal at terminal 614, which is then supplied to the low-pass filter. The low-pass filter ensures that any fluctuations in the control signal received from the controller are smoothed out, contributing to the stability and accuracy of the voltage conversion process. Further, the control signal is supplied to the input selection switch 612. The input selection switch 612 is configured to connect the voltage conversion resistor 610 to the ground based on the control signal. When the controller 104 transmits a control signal to the input selection switch 612 via terminal 614, the current input mode is activated. In this mode, an input current of, for example, 20 mA applied at terminal 110 flows through the voltage conversion resistor 610, which has a resistance of 500Ω. As a result, this configuration generates a voltage of approximately 10V at node F. Further, the details are described in conjunction with FIG. 6.

Although not shown, the analog circuit 106 can be implemented using discrete components. In other words, electronic sub-circuits may be is made out of a collection of single electronic components, instead of using an integrated circuit (IC) where all the electronic components are formed on one piece of silicon.

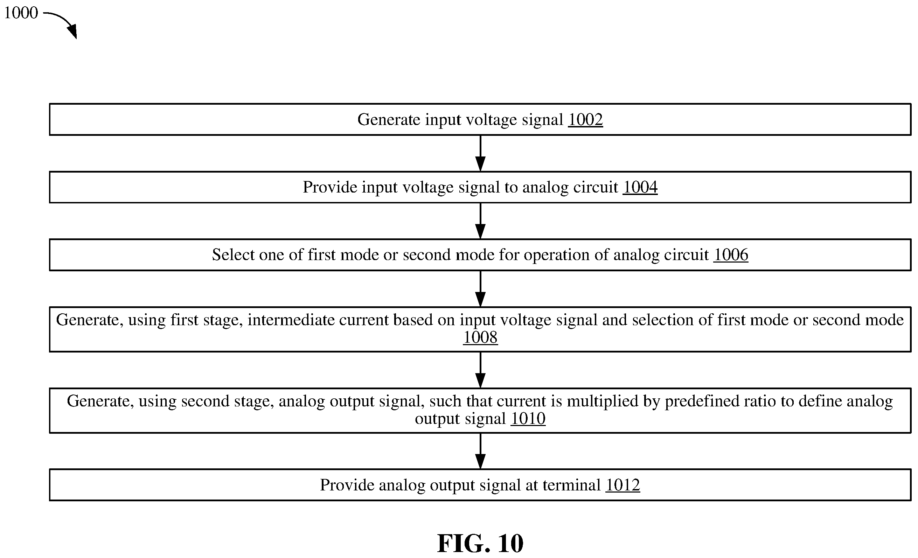

FIG. 10 is a diagram that illustrates a flowchart 1000 of a method for generating the analog output signal 206 using the analog circuit 106, in accordance with an embodiment of the disclosure. FIG. 10 is explained in conjunction with elements from FIG. 1, FIG. 2A, FIG. 2B, FIG. 3, FIG. 4, FIG. 5, FIG. 6, FIG. 7, FIG. 8, FIG.9A, and FIG. 9B. With reference to FIG. 10, there is shown the flowchart 1000. The operations of the exemplary flowchart may be executed by the HVAC field device 102. The operations of the flowchart 1000 may start at 1002.

At 1002, the input voltage signal 202 is generated. In an embodiment, the controller 104 of the HVAC field device 102 is configured to generate the input voltage signal 202. In an example, the input voltage signal 202 may correspond to the PWM signal which is generated using a switching circuit and/or a digital-to-analog converter (DAC).

At 1004, the input voltage signal 202 is provided to the analog circuit 106. In an embodiment, the input terminal 208 is coupled to the first stage 112 of the analog circuit 106. the input voltage signal 202 is provided to the input terminal 208 of the analog circuit 106. In an example, the analog circuit 106 may be configured to receive the input voltage signal 202 at the input terminal 208. Further, the analog circuit 106 includes the first stage 112, the second stage 114 coupled to the first stage 112, and the plurality of resistors 116, each of the plurality of resistors 116 being coupled to at least one of the first stage 112, or the second stage 114, the analog circuit 106 being provided with the mode selection signal.

At 1006, one of the first mode or the second mode is selected. In an embodiment, the HVAC field device 102 is configured to select one of the first mode or the second mode for the operation of the analog circuit 106. For instance, the controller 104 is configured to generate the mode selection signal. The mode selection signal is associated with one of the first mode or the second mode. For instance, the first mode may correspond to the current mode, and the second mode may correspond to the voltage mode. In an example, in the first mode, the controller 104 may generate the mode selection signal by providing a 0V signal. Conversely, in the second mode, the controller 104 is configured to generate the mode selection signal by providing a 3.3V signal.

At 1008, the intermediate current 204 is generated based on the input voltage signal 202 and the selection of the first mode or the second mode. In an embodiment, the first stage 112 of the analog circuit 106 is configured to generate the intermediate current 204 based on the input voltage signal 202 and the selected one of the first mode or the second mode.

At 1010, the analog output signal 206 is generated using the second stage 114. In an embodiment, the HVAC field device 102 is configured to generate the analog output signal 206 based on the intermediate current 204, such that the intermediate current 204 is multiplied by a predefined ratio to define the analog output signal 206. In an embodiment, the second stage 114 is configured to generate the analog output signal 206, such that the intermediate current 204 is multiplied by the predefined ratio to define the analog output signal 206. The predefined ratio is associated with the first pair of resistors which includes the first resistor, R₁, 322, the second resistor, R₂, 324, i.e., i.e., R₁/ R₂.

In an example, in the first mode, a gain factor of the analog circuit corresponds to a ratio of the value of the analog output signal 206 to the value of the input voltage signal 202. In the first mode, the gain factor is associated with a first set of resistors of the plurality of resistors 116. Further, the first set of resistors includes the first resistor, R₁, 322, the second resistor, R₂, 324, and the current feedback resistor, R₃, 318. Herein, the gain factor corresponds to a ratio value of the first resistor with a product of the second resistor and the third resistor, i.e., R₁/ R₃ * R₂. The transconductive gain of the first stage corresponds to the inverse of the resistance of the third resistor 1/ R₃ and the predefined ratio of the second stage to R₁/ R₂.

In another example, the gain factor in the second mode is associated with a second set of resistors of the plurality of resistors 116. Further, the second set of resistors includes the resistor, R₅, 336, and the resistor, R₆, 338. Herein, the gain factor corresponds to a ratio value of the sum of the resistor R₅ and the resistor R₆ with the resistor R₆, i.e., (R₅ + R₆) / R₆. The second set of resistors including the resistors R₅ and R₆ is exclusive of the first set of resistors including R₁, R₂, and R₃. The gain factor associated with the second mode is independent of the predefined ratio of the second mode due to the direct feedback of the third voltage.

At 1012, the analog output signal 206 is provided at the terminal 110. In an embodiment, the HVAC field device 102 is configured to provide the analog output signal 206 at the input/output (I/O) terminal (i.e., the terminal 110). In an example, the second stage 114 may be configured to provide the analog output signal 206 at the terminal 110. Further, the external component is coupled to the analog circuit 106 at the terminal 110.

Accordingly, blocks of the flowchart 1000 support combinations of means for performing the specified functions and combinations of operations for performing the specified functions.

In an embodiment, the HVAC field device 102 may comprise means for performing each of the operations described above. In this regard, according to an example embodiment, examples of means for performing operations may comprise, for example, a device or circuit for executing instructions or executing a method for processing information as described above.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of some example combinations of reactants and/or functions, it should be appreciated that different combinations of reactants and/or functions may be provided by alternative embodiments without departing from the scope of the appended claims. In this regard, for example, different combinations of reactants and/or functions than those explicitly described above are also contemplated as may be outlined in some of the appended claims. Although specific terms are employed herein, they are used in a generic and descriptive sense only and not for purposes of limitation.

## Claims

1. A heating, ventilation, and air conditioning (HVAC) field device (102) comprising:
a controller (104) configured to generate an input voltage signal (202);
an analog circuit (106) coupled to the controller, wherein the controller is configured to provide the input voltage signal (202) to the analog circuit, and wherein the analog circuit comprises:
a first stage (112),
a second stage (114) coupled to the first stage, and
a plurality of resistors (116), wherein each of the plurality of resistors is coupled to at least one of: the first stage, or the second stage;
a mode selector (108) coupled to the analog circuit for selecting one of: a first mode, or a second mode; and
a terminal (110) coupled to the analog circuit, wherein the analog circuit is configurable to provide an analog output signal (206) at the terminal, wherein
the first stage is configured to generate an intermediate current (204) based on the input voltage signal (202) and a selection of one of: the first mode, or the second mode, and
the second stage is configured to generate the analog output signal based on the intermediate current, such that the intermediate current is multiplied by a predefined ratio to define the analog output signal, wherein the predefined ratio is associated with one or more resistors of the plurality of resistors.

2. The HVAC field device (102) according to claim 1, wherein the first mode is a current mode, and the second mode is a voltage mode.

3. The HVAC field device (102) according to any one of claims 1 or 2, wherein the second stage (114) is configured to implement a current multiplier configuration (304), and wherein the second stage comprises:
a first amplifier circuit (326) having a first positive terminal, a first negative terminal, and a first output terminal;
a first transistor circuit (328) having a first control terminal, a first terminal, and a second terminal, wherein the first control terminal is coupled to the first output terminal;
a first pair of resistors from the plurality of resistors comprising a first resistor (322) coupled to the first positive terminal and a second resistor (324) coupled to the first terminal (320), wherein the first resistor forms a first path for a flow of the intermediate current (204) towards the first positive terminal, and wherein the second resistor forms a second path parallel to the first path for a flow of the analog output signal (206) towards the first terminal; and
a feedback path between the first negative terminal and the first terminal, wherein the feedback path is configurable to adjust a second voltage across the second path substantially equal to a first voltage across the first path.

4. The HVAC field device (102) according to any one of claims 1 to 3, wherein a gain factor of the analog circuit corresponds to a ratio of a value of the analog output signal (206) to a value of the input voltage signal (202), and wherein the gain factor in the first mode is associated with a first set of resistors of the plurality of resistors (116), the gain factor in the second mode is associated with a second set of resistors (332) of the plurality of resistors, and the first set of resistors is exclusive of the second set of resistors.

5. The HVAC field device (102) according to claim 4, wherein
the analog circuit (106) further comprises a feedback circuit coupled to the mode selector (108), the feedback circuit comprising a first feedback path (404A) associated with the first mode and a second feedback path (404B) associated with the second mode,
the first feedback path is coupled to a current feedback resistor (318) of the plurality of resistors (116), such that a first voltage difference across the current feedback resistor is substantially equal to the value of the input voltage signal (202),
the second feedback path is coupled to a first junction between a second pair of resistors (332) of the plurality of resistors, such that a third voltage at the first junction is substantially equal to the value of the input voltage signal (202), and
the mode selector (108) is configurable to select one of: the first feedback path, or the second feedback path, based on the mode selection signal.

6. The HVAC field device (102) according to any one of claims 1 to 5, wherein
the controller (104) is coupled to the mode selector (108),
the controller is configured to generate a mode selection signal for providing the mode selection signal to the mode selector, and
the mode selection signal is associated with one of: the first mode, or the second mode.

7. The HVAC field device (102) according to claim 6, wherein the analog circuit (106) is further configured to:
supply a first voltage output signal at the first junction to the controller (104) as an output voltage.

8. The HVAC field device (102) according to claim 6, wherein the plurality of resistors (116) comprises a third pair of resistors (506) connected in series, such that the third pair of resistors defines a second junction therebetween, and wherein the analog circuit (106) is further configured to:
generate, using the third pair of resistors, a second voltage output signal at the second junction based on the analog output signal (206); and
supply the second voltage output signal to the controller (104) as an output voltage.

9. The HVAC field device (102) according to any one of claims 7 or 8, wherein the controller (104) further comprises an analog-to-digital converter (ADC), wherein the terminal (110) is configured to be coupled to an external component, and wherein the controller is further configured to:
generate, using the ADC, a digital signal based on the output voltage; and
determine status data associated with the external component based on the digital signal, wherein the status data corresponds to at least one of: fault data, connection data, or resistance data.

10. The HVAC field device (102) according to claim 9, wherein the analog circuit (106) is dynamically configurable to operate in one of: an input mode to receive an input signal from an external source at the terminal (110), or an output mode to supply the analog output signal to the external component via the terminal.

11. The HVAC field device (102) according to any one of claims 9 or 10, wherein the analog circuit (106) is configurable to be coupled to a sensor to supply a predefined current via the terminal (110), and wherein the controller (104) is further configured to:
generate, using the ADC, a sensor signal based on the output voltage;
determine sensor status data associated with the sensor based on the sensor signal, wherein the sensor status data indicates sensor resistance data; and
determine temperature data associated with the sensor based on the sensor status data.

12. The HVAC field device (102) according to any one of claims 6 to 11, wherein the first stage (112) is configured as a current sink, and wherein the first stage comprises:
a second amplifier circuit (314) having a second positive terminal coupled to the controller (104) to receive the input voltage signal (202), a second negative terminal coupled to the mode selector (108), and a second output terminal; and
a second transistor circuit (316) having a second control terminal, a third terminal, and a fourth terminal, wherein the second control terminal is coupled to the second output terminal, the fourth terminal is coupled to the current feedback resistor (318), and the third terminal is coupled to the second stage (114).

13. The HVAC field device (102) according to any one of claims 11 or 12, wherein the controller (104) is further configured to:
generate the mode selection signal based on one of: the status data, the sensor status data, or a user input.

14. The HVAC field device (102) according to any one of claims 8 to 13, wherein the analog circuit (106) further comprises:
a switchable pull-down load (406) coupled to the terminal (110), wherein the switchable pull-down load is configurable to apply a pull-down bias based on the selection of the second mode by the mode selector (108), such that the pull-down bias is applied to achieve a defined voltage at the terminal in the second mode, and wherein the switchable pull-down load is preferably implemented based on a current mirror configuration;
a switching circuit (902) comprising a plurality of input nodes, an output node connected to the analog circuit (106), and a control input node coupled to the controller (104) to receive a control signal, wherein a first input node of the plurality of input nodes is connected to a first reference voltage and a second input node of the plurality of input nodes is connected to a second reference voltage, and wherein the switching circuit is configured to switch between the first reference voltage and the second reference voltage based on the control signal; and
a voltage buffer (502) positioned between the terminal and one of: the second pair of resistors (332), or the third pair of resistors (506).

15. A method implemented using a heating, ventilation, and air conditioning (HVAC) field device (102), the method comprising:
generating (1002) an input voltage signal (202);
providing (1004) the input voltage signal (202) to an analog circuit (106), wherein the analog circuit comprises a first stage (112), a second stage (114) coupled to the first stage, and a plurality of resistors (116), and wherein each of the plurality of resistors is coupled to at least one of: the first stage, or the second stage;
selecting (1006) one of: a first mode, or a second mode, for an operation of the analog circuit;
generating (1008), using the first stage, an intermediate current (204) based on the input voltage signal (202) and a selection of one of: the first mode, or the second mode;
generating (1010), using the second stage, an analog output signal (206) based on the intermediate current, wherein the intermediate current is multiplied by a predefined ratio to define the analog output signal, and wherein the predefined ratio is associated with one or more resistors of the plurality of resistors; and
providing (1012) the analog output signal at a terminal (110), wherein the terminal is associated with the analog circuit.
